# EUROPEAN PATENT APPLICATION

(11) **EP 4 610 075 A1**
(43) Date of publication of application: **03.09.2025**
(21) Application number: 23881285.3
(22) Date of filing: 28.06.2023
(51) Int. Cl.: B60H 1/04, B60W 20/00, B60H 1/00, B60K 1/00

(54) **THERMAL MANAGEMENT CONTROL METHOD, THERMAL MANAGEMENT CONTROL DEVICE, AND VEHICLE**

(30) Priority: 26.10.2022 CN 202211320913
(71) Applicant: BYD Company Limited, Shenzhen, Guangdong 518118 (CN)
(72) Inventor: ZHANG, Junyan, Shenzhen, Guangdong 518118 (CN); TAN, Tingshuai, Shenzhen, Guangdong 518118 (CN); ZHAO, Shangzhong, Shenzhen, Guangdong 518118 (CN); TANG, Yifeng, Shenzhen, Guangdong 518118 (CN); WANG, Zhipeng, Shenzhen, Guangdong 518118 (CN)
(74) Representative: Mathys & Squire
(86) International application number: PCT/CN2023/103268
(87) International publication number: WO 2024/087696

(57) **Abstract**

A thermal management control method, a thermal management control device, and a hybrid vehicle. The hybrid vehicle comprises multiple driving modes and multiple passenger compartment heating modes, each driving mode corresponding to corresponding determination rules, and the determination rule being used to select a corresponding passenger compartment heating mode. The thermal management control method comprises: acquiring a current driving mode; on the basis of the acquired driving mode, entering a corresponding determination rule based on the acquired driving mode; according to a determination result of the determination rule, entering a corresponding passenger compartment heating mode, so that a heat source is reasonably utilized, and economic and energy-saving heating effects are achieved.

## Description

### CROSS-REFERENCE TO RELATED APPLICATIONS

The present disclosure claims priority to the Chinese patent application No. "202211320913.2", entitled "THERMAL MANAGEMENT CONTROL METHOD, THERMAL MANAGEMENT CONTROL DEVICE, AND HYBRID ELECTRIC VEHICLE", filed by BYD Company Limited on October 26, 2022.

### FIELD

The present disclosure relates to the field of vehicle technologies, and specifically, to a thermal management control method, a thermal management control device, and a hybrid electric vehicle.

### BACKGROUND

A hybrid electric vehicle in the related art typically has a pure electric mode and a hybrid mode. However, the heating mode remains the same in the two modes, failing to utilize a heat source reasonably to achieve a cost-effective and energy-saving heating effect. Therefore, improvements are needed.

### SUMMARY

The present disclosure aims to solve one of technical problems in the related art at least to some extent.

In view of this, the present disclosure provides a thermal management control method for a vehicle, a computer-readable storage medium, a thermal management control device, and a hybrid electric vehicle, so that different heating modes can be selected according to different driving modes, to reasonably utilize a heat source, thereby achieving a cost-effective and energy-saving heating effect.

According to a thermal management control method for a vehicle according to an embodiment of a first aspect of the present disclosure, the vehicle includes a plurality of driving modes and a plurality of passenger compartment heating modes. The driving modes respectively correspond to corresponding determination rules. The determination rules are configured to select the corresponding passenger compartment heating modes. The thermal management control method includes: acquiring a current driving mode; entering a corresponding determination rule based on the acquired driving mode; and entering a corresponding passenger compartment heating mode according to a determination result of the determination rule. According to the thermal management control method for a hybrid electric vehicle of the present disclosure, different heating modes can be selected according to different driving modes, to reasonably utilize the heat source, thereby achieving the cost-effective and energy-saving heating effect.

According to a computer-readable storage medium according to an embodiment of a second aspect of the present disclosure, the computer-readable storage medium has a computer program stored therein. The computer program is suitable for being executed by a processor to implement the thermal management control method according to the embodiment of the first aspect of the present disclosure.

A thermal management control device according to an embodiment of a third aspect of the present disclosure includes a processor and a memory. The processor and the memory are connected with each other. The memory is configured to store a computer program. The computer program includes a program instruction. The processor is configured to invoke the program instruction, to perform the thermal management control method according to the embodiment of the first aspect of the present disclosure.

A vehicle according to an embodiment of a fourth aspect of the present disclosure includes the thermal management control device according to the embodiment of the third aspect of the present disclosure.

Additional aspects and advantages of the present disclosure will be given in the following description, some of which will become apparent from the following description or may be learned from practices of the present disclosure.

### BRIEF DESCRIPTION OF THE DRAWINGS

FIG. 1 is a principle diagram of a thermal management control method for a vehicle according to an embodiment of the present disclosure;
FIG. 2 is a schematic diagram of a thermal management control system for a hybrid electric vehicle according to an embodiment of the present disclosure;
FIG. 3 is a principle diagram of a thermal management control method for a hybrid electric vehicle according to an embodiment of the present disclosure;
FIG. 4 is a principle diagram of a thermal management control method for a hybrid electric vehicle according to an embodiment of the present disclosure;
FIG. 5 is a principle diagram of a thermal management control method for a hybrid electric vehicle according to an embodiment of the present disclosure;
FIG. 6 is a principle diagram of a thermal management control method for a hybrid electric vehicle according to an embodiment of the present disclosure;
FIG. 7 is a block diagram of a thermal management control device according to an exemplary embodiment; and
FIG. 8 is a block diagram of a vehicle according to an exemplary embodiment.

### DETAILED DESCRIPTION

Embodiments of the present disclosure are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary, and are intended to explain the present disclosure and cannot be construed as a limitation to the present disclosure.

The following disclosure provides a plurality of different embodiments or examples to implement different structures of the present disclosure. To simplify the disclosure of the present disclosure, components and settings in particular examples are described below. Certainly, they are merely examples and are not intended to limit the present disclosure. In addition, the present disclosure may repeat reference numerals and/or letters in different examples. The repetition is for the purposes of simplicity and clarity, which itself does not indicate a relationship between the embodiments and/or settings discussed. Moreover, the present disclosure provides examples of various particular processes and materials, but a person of ordinary skill in the art may be aware of applicability of another process and/or use of another material.

The following first describes a thermal management control method for a vehicle according to an embodiment of a first aspect of the present disclosure.

In this embodiment of the present disclosure, a vehicle is described as a hybrid electric vehicle. The hybrid electric vehicle includes a plurality of driving modes and a plurality of passenger compartment heating modes.

For example, the hybrid electric vehicle may include a motor and an engine. The hybrid electric vehicle may have at least two driving modes, which are respectively a pure electric mode (an EV mode for short, EV is an abbreviation of an electric vehicle) and a hybrid mode (an HEV mode for short, HEV is an abbreviation of a hybrid electric vehicle). In the pure electric mode, the vehicle is driven to run by the motor. In the hybrid mode, the vehicle is driven to run by a combination of the motor and the engine.

For example, the passenger compartment heating modes may be classified into: a heat pump heating mode utilizing a compressor, and a warm air heating mode not utilizing a compressor. The heat pump heating mode may further be classified into: a heat pump air source heating mode that uses air as a heat source, and a heat pump liquid source heating mode that utilizes a liquid circuit as a heat source. The warm air heating mode may be classified into: an engine warm air mode that uses the engine as a heat source, an electric heating warm air mode that utilizes an electric heater as a heat source, etc.

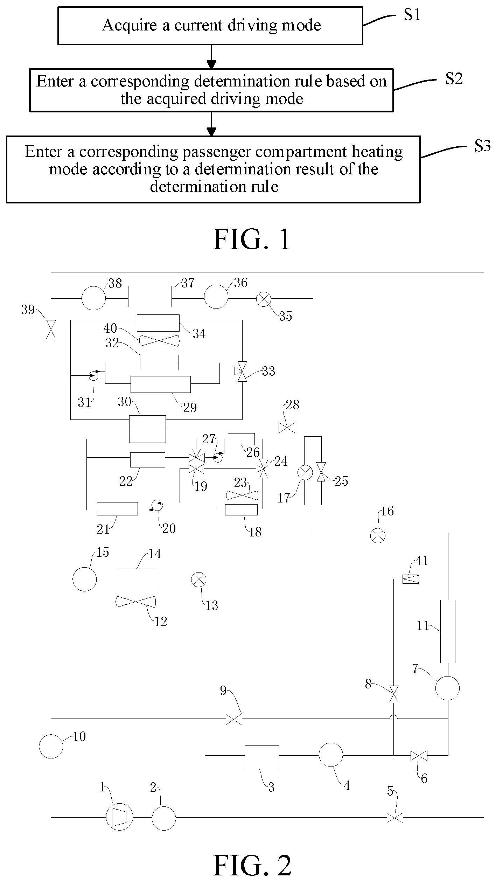

In this embodiment of the present disclosure, the driving modes respectively correspond to corresponding determination rules. The determination rules are configured to select the corresponding passenger compartment heating modes. With reference to FIG. 2, the thermal management control method may include: S1: A current driving mode is acquired. S2: A corresponding determination rule is entered based on the acquired driving mode. S3: A corresponding passenger compartment heating mode is entered according to a determination result of the determination rule.

In this way, the corresponding determination rules may be set for different driving modes, and the suitable passenger compartment heating mode corresponding to the current driving mode is selected according to the determination result of the determination rule, so that both heating requirements and reasonable energy utilization can be balanced, to achieve a cost-effective, energy-saving, and effective heating purpose. In short, according to the thermal management control method for a hybrid electric vehicle of the present disclosure, different heating modes can be selected according to different driving modes, to reasonably utilize the heat source, thereby achieving a cost-effective and energy-saving heating effect.

In some embodiments, the plurality of driving modes include the HEV mode. The plurality of passenger compartment heating modes include: a first heat pump heating mode and a first warm air mode. A heat pump circuit used in the first heat pump heating mode exchanges heat with a first liquid circuit that absorbs heat from the engine. A warm air circuit used in the first warm air mode absorbs the heat from the engine.

For example, with reference to FIG. 2, in the first heat pump heating mode (e.g., a large-scale heat pump liquid source heating mode described herein), a heat pump circuit including a compressor 1 is operated. The heat pump circuit may include the compressor 1, a condenser (e.g., an in-vehicle condenser 3 shown in FIG. 2), a throttling device (e.g., a third electronic expansion valve 17 shown in FIG. 2), and an evaporator (e.g., a liquid circuit heat exchanger 30 shown in FIG. 2). The condenser (e.g., the in-vehicle condenser 3 shown in FIG. 2) is configured to heat a passenger compartment. The evaporator (e.g., the liquid circuit heat exchanger 30 shown in FIG. 2) exchanges heat with the first liquid circuit that absorbs the heat from the engine (e.g., a liquid circuit where an engine 26 and an engine circulation liquid pump 27 are located in FIG. 2). The heat from the engine is used as a heat source of the heat pump circuit.

For example, with reference to FIG. 2, in the first warm air mode (e.g., the engine warm air mode described herein), a warm air circuit that does not include a compressor is operated. The warm air circuit may include a warm air core 22, the engine 26, and the engine circulation liquid pump 27. The engine circulation liquid pump 27 transfers the heat from the engine 26 to the warm air core 22. The warm air core 22 utilizes the heat from the engine 26 to heat the passenger compartment.

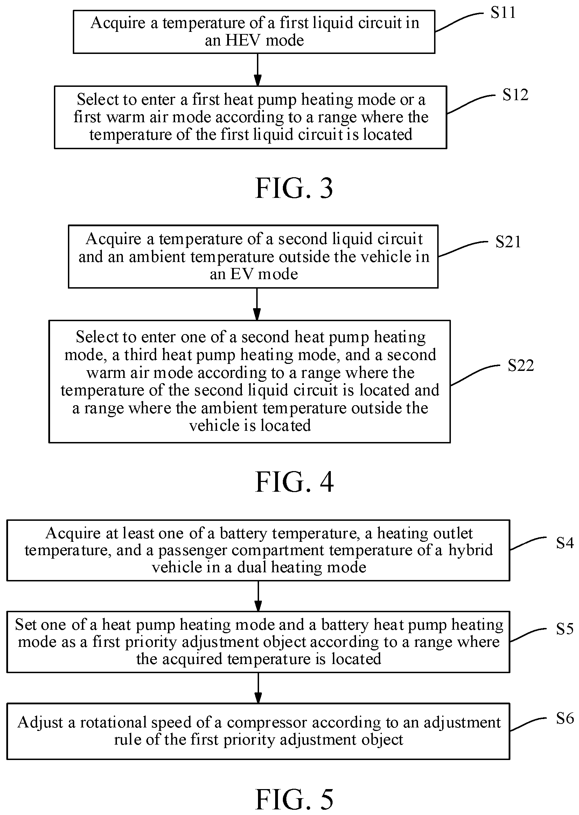

In this embodiment of the present disclosure, with reference to FIG. 3, the thermal management control method may include the following steps: S11: A temperature of the first liquid circuit is acquired in the HEV mode. S12: Selection is made according to a range where the temperature of the first liquid circuit falls, to enter the first heat pump heating mode or the first warm air mode. Namely, when the acquired current driving mode is the HEV mode, the determination rule entered based on the HEV mode includes: determining the range where the temperature of the first liquid circuit falls, and selecting, according to the range where the temperature of the first liquid circuit falls, to enter the first heat pump heating mode or the first warm air mode.

Based on the above solution, in the HEV mode, since the engine 26 is operating, use of the first heat pump heating mode related to the heat from the engine 26 or the first warm air mode related to the heat from the engine 26 may be selected according to a heat condition of the engine 26, thereby achieving a cost-effective, energy-saving, and effective heating effect.

For example, the step that "selection is made according to a range where the temperature of the first liquid circuit falls, to enter the first heat pump heating mode or the first warm air mode" may specifically include: entering the first heat pump heating mode when the temperature of the first liquid circuit is less than a first set temperature (e.g., the first set temperature may be 60°C); and entering the first warm air mode when the temperature of the first liquid circuit is greater than the first set temperature (e.g., the first set temperature may be 60°C).

Namely, when the temperature of the first liquid circuit is insufficient, heating may be performed by the heat pump circuit using the compressor 1, thereby ensuring the heating effect of the passenger compartment. When the temperature of the first liquid circuit is sufficient, heating may be performed by the warm air circuit not using the compressor 1, thereby achieving an energy-saving effect.

For example, the step that "selection is made according to a range where the temperature of the first liquid circuit falls, to enter the first heat pump heating mode or the first warm air mode" may further include: not entering the first heat pump heating mode or the first warm air mode when the temperature of the first liquid circuit is less than a second set temperature (e.g., the second set temperature may be 40°C). The second set temperature is less than the first set temperature.

In other words, when the temperature of the first liquid circuit is greater than the second set temperature (e.g., 40°C) and less than the first set temperature (e.g., 60°C), the first heat pump heating mode is entered, and when the temperature of the first liquid circuit is less than the second set temperature (e.g., 40°C), neither the first heat pump heating mode nor the first warm air mode is entered. Therefore, a low-temperature start preheating requirement of the engine 26 can be satisfied, thereby ensuring that the vehicle can normally run and operate.

It should be noted that, when the temperature of the first liquid circuit is equal to the first set temperature, it may be set to enter the first heat pump heating mode, or enter the first warm air mode, which is not limited here. When the temperature of the first liquid circuit is equal to the second set temperature, it may be set to enter the first heat pump heating mode or not to enter the first heat pump heating mode, which is not limited here.

In some embodiments, the plurality of driving modes include the EV mode, and the plurality of passenger compartment heating modes include: a second heat pump heating mode, a third heat pump heating mode, and a second warm air mode. A heat pump circuit used in the second heat pump heating mode exchanges heat with a second liquid circuit that absorbs heat from the motor. A heat pump circuit used in the third heat pump heating mode exchanges heat with an air heat source. A warm air circuit used in the second warm air mode absorbs heat from an electric heater 21.

For example, with reference to FIG. 2, in the second heat pump heating mode (e.g., a small-scale heat pump liquid source heating mode described herein), the heat pump circuit including the compressor 1 is operated. The heat pump circuit may include the compressor 1, the condenser (e.g., the in-vehicle condenser 3 shown in FIG. 2), the throttling device (e.g., the third electronic expansion valve 17 shown in FIG. 2), and the evaporator (e.g., the liquid circuit heat exchanger 30 shown in FIG. 2). The condenser (e.g., the in-vehicle condenser 3 shown in FIG. 2) is configured to heat the passenger compartment. The evaporator (e.g., the liquid circuit heat exchanger 30 shown in FIG. 2) exchanges heat with the second liquid circuit that absorbs the heat from the motor (e.g., a liquid circuit where a low-temperature circuit coolant pump 31 and a motor and electric control system 29 are located in FIG. 2). The heat from the motor, etc. is used as a heat source of the heat pump circuit.

For example, with reference to FIG. 2, in the third heat pump heating mode (e.g., a heat pump air source heating mode described herein), the heat pump circuit including the compressor 1 is operated. The heat pump circuit may include the compressor 1, the condenser (e.g., the in-vehicle condenser 3 shown in FIG. 2), the throttling device (e.g., a second electronic expansion valve 16 shown in FIG. 2), and the evaporator (e.g., an outside heat exchanger 11 shown in FIG. 2). The condenser (e.g., the in-vehicle condenser 3 shown in FIG. 2) is configured to heat the passenger compartment. The evaporator (e.g., the outside heat exchanger 11 shown in FIG. 2) exchanges heat with outside air. Heat from an air source is used as a heat source of the heat pump circuit.

For example, with reference to FIG. 2, in the second warm air mode (e.g., an electric heating warm air mode described herein), the warm air circuit not including the compressor is operated. The warm air circuit may include the warm air core 22, a heating circulation liquid pump 20, and the electric heater 21. Heat generated by the electric heater 21 is transferred to the warm air core 22 through the heating circulation liquid pump 20. The warm air core 22 heats the passenger compartment through the heat generated by the electric heater 21.

In this embodiment of the present disclosure, with reference to FIG. 4, the thermal management control method may include the following steps: S21: In the EV mode, a temperature of the second liquid circuit and an ambient temperature the vehicle are acquired. S22: Selection is made according to a range where the temperature of the second liquid circuit falls and a range where the ambient temperature outside the vehicle falls, to enter one of the second heat pump heating mode, the third heat pump heating mode, and the second warm air mode. Namely, when the acquired current driving mode is the EV mode, the determination rule entered based on the EV mode includes: determining the range where the temperature of the second liquid circuit falls and the range where the ambient temperature outside the vehicle falls, and selecting, according to the range where the temperature of the second liquid circuit falls and the range where the ambient temperature outside the vehicle falls, which one of the second heat pump heating mode, the third heat pump heating mode, and the second warm air mode to enter.

Based on the above solution, in the EV mode, since the motor operates and the engine 26 does not operate, the second heat pump heating mode related to the heat from the motor may be selected for heating, or the third heat pump heating mode related to the heat from the air source, or the second warm air mode in which the electric heater 21 is used as the heat source may be used for heating, to achieve the cost-effective, energy-saving, and effective heating effect.

For example, the step that "selection is made according to a range where the temperature of the second liquid circuit falls and a range where the ambient temperature outside the vehicle falls, to enter one of the second heat pump heating mode, the third heat pump heating mode, and the second warm air mode" may specifically include: entering the second heat pump heating mode when the temperature of the second liquid circuit is greater than a third set temperature (e.g., the third set temperature may be -10°C); and entering the third heat pump heating mode or the second warm air mode when the temperature of the second liquid circuit is less than the third set temperature (e.g., the third set temperature may be -10°C).

Namely, when the temperature of the second liquid circuit is sufficient, the second heat pump heating mode in which the heat from the motor is used as the heat source may be used for heating, thereby achieving the energy-saving effect. When the temperature of the second liquid circuit is insufficient, the third heat pump heating mode in which the air source is used as the heat source may be used for heating, or the second warm air mode in which the electric heater 21 is used as the heat source may be used for heating, thereby ensuring the heating effect of the passenger compartment.

For example, the "selecting to enter the third heat pump heating mode or the second warm air mode when the temperature of the second liquid circuit is less than the third set temperature" may further include: entering the third heat pump heating mode when the ambient temperature outside the vehicle is greater than a fourth set temperature (e.g., the fourth set temperature may be -10°C); and entering the second warm air mode when the ambient temperature outside the vehicle is less than the fourth set temperature.

Namely, when the ambient temperature outside the vehicle is sufficient, the third heat pump heating mode in which the air source is used as the heat source may be used for heating, thereby achieving the energy-saving effect. When the ambient temperature outside the vehicle is insufficient, the second warm air mode in which the electric heater 21 is used as the heat source is used for heating, thereby ensuring the heating effect of the passenger compartment.

It should be noted that, when the temperature of the second liquid circuit is equal to the third set temperature, it may be set to enter any one of the second heat pump heating mode, the third heat pump heating mode, and the second warm air mode, which is not limited here. When the ambient temperature outside the vehicle is equal to the fourth set temperature, it may be set to enter the third heat pump heating mode, or enter the second warm air mode, which is not limited here.

In some embodiments, the plurality of passenger compartment heating modes include at least one heat pump heating mode (e.g., the first heat pump heating mode, the second heat pump heating mode, and the third heat pump heating mode described above, which will not be elaborated here), and the hybrid electric vehicle further includes a battery heat pump heating mode.

For example, with reference to FIG. 2, in the battery heat pump heating mode, the heat pump circuit including the compressor 1 is operated. The heat pump circuit may include the compressor 1, the condenser (e.g., a battery heat exchanger 37 shown in FIG. 2), the throttling device (e.g., a fourth electronic expansion valve 35 shown in FIG. 2), and the evaporator (e.g., the liquid circuit heat exchanger 30 shown in FIG. 2). The condenser (e.g., the battery heat exchanger 37 shown in FIG. 2) is configured to heat a battery. The evaporator (e.g., the liquid circuit heat exchanger 30 shown in FIG. 2) exchanges heat with the first liquid circuit that absorbs heat from the electric heater 21 (e.g., a liquid circuit where the heating circulation liquid pump 20 and the electric heater 21 are located in FIG. 2). The heat from the electric heater 21 is used as a heat source of the heat pump circuit.

Certainly, the present disclosure is not limited thereto. In other embodiments of the present disclosure, the evaporator (e.g., the liquid circuit heat exchanger 30 shown in FIG. 2) of the heat pump circuit in the battery heat pump heating mode may also absorb other heat, such as the heat from the second liquid circuit where the low-temperature circuit coolant pump 31 and the motor and electric control system 29 are located in FIG. 2, which will not be elaborated here.

In summary, a vehicle thermal management system in an embodiment of the present disclosure may flexibly adjust a thermal management working mode of the vehicle by combining driving working conditions of a new energy vehicle, an ambient temperature, thermal management requirements, and a temperature of a liquid-cooled circuit in the whole vehicle, thereby achieving optimization of the energy management of the whole vehicle and achieving a purpose of energy saving. For example, in the HEV mode, by combining the ambient temperature, a temperature of an engine thermal management system, and the thermal management requirements, heat is preferably extracted from the engine, and engine cooling and passenger compartment heating are achieved simultaneously. When the engine heat is insufficient, the compressor or the electric heater is started for heating. In the EV mode, working modes of an air source heat pump and a motor heat source heat pump are distinguished based on the temperature of the motor and the electric control system thereof.

In some embodiments, the hybrid electric vehicle includes a dual heating mode. In the dual heating mode, the heat pump heating mode (e.g., one of the first heat pump heating mode, the second heat pump heating mode, and the third heat pump heating mode described above) and the battery heat pump heating mode operate simultaneously, and the heat pump circuits respectively used by both share the same compressor 1. Therefore, passenger compartment heating and battery heating may be achieved simultaneously, and by using the same compressor 1, the thermal management system can be simplified, and costs are reduced.

In some embodiments, with reference to FIG. 5, the thermal management control method may include the following steps: S4: In the dual heating mode, at least one of a battery temperature, a heating outlet temperature, and a passenger compartment temperature of the hybrid electric vehicle is acquired. S5: One of the heat pump heating mode and the battery heat pump heating mode is set as a first priority adjustment object according to a range where the acquired temperature falls. S6: A rotational speed of the compressor 1 is adjusted according to an adjustment rule of the first priority adjustment object.

Since in the dual heating mode, the heat pump heating mode and the battery heat pump heating mode operate simultaneously and the heat pump circuits respectively used by both share the same compressor 1, based on the control method in the present disclosure, the rotational speed of the compressor 1 may be adjusted according to priority levels of the heat pump heating mode and the battery heat pump heating mode, thereby allowing the rotational speed of the compressor 1 to better coordinate passenger compartment heating and battery heating requirements.

For example, when the heat pump heating mode is set as the first priority adjustment object, the rotational speed of the compressor 1 is adjusted according to an adjustment rule of the heat pump heating mode, thereby making the passenger compartment heating effect as a primary adjustment goal and better satisfying passenger compartment heating requirements. For example, when the battery heat pump heating mode is set as the first priority adjustment object, the rotational speed of the compressor 1 is adjusted according to an adjustment rule of the battery heat pump heating mode, thereby making a battery heating effect as a primary adjustment goal and better satisfying battery heating requirements.

For example, the steps that "in the dual heating mode, at least one of a battery temperature, a heating outlet temperature, and a passenger compartment temperature of the hybrid electric vehicle is acquired; and one of the heat pump heating mode and the battery heat pump heating mode is set as a first priority adjustment object according to a range where the acquired temperature falls" may specifically include: acquiring a battery temperature; and setting the heat pump heating mode as the first priority adjustment object when the battery temperature is greater than a fifth set temperature (e.g., the fifth set temperature may be 10°C). In other words, when the battery temperature is sufficient, the passenger compartment heating effect may be used as the primary adjustment goal, thereby better satisfying the passenger compartment heating requirements.

For example, the steps that "in the dual heating mode, at least one of a battery temperature, a heating outlet temperature, and a passenger compartment temperature of the hybrid electric vehicle is acquired; and one of the heat pump heating mode and the battery heat pump heating mode is set as a first priority adjustment object according to a range where the acquired temperature falls" may further include: setting the battery heat pump heating mode as the first priority adjustment object when the battery temperature is less than the fifth set temperature (e.g., the fifth set temperature may be 10°C); or, acquiring a passenger compartment temperature, and setting the battery heat pump heating mode as the first priority adjustment object when the battery temperature is less than the fifth set temperature and the passenger compartment temperature is greater than a target in-vehicle temperature; or, acquiring the heating outlet temperature, and setting the battery heat pump heating mode as the first priority adjustment object when the battery temperature is less than the fifth set temperature and the heating outlet temperature is greater than a target outlet temperature. In other words, when the battery temperature is insufficient or when the battery temperature is insufficient but the passenger compartment temperature (or the heating outlet temperature) is sufficient, the battery heating effect may be used as the primary adjustment goal, thereby better satisfying the battery heating requirements, ensuring effective operation of the battery, and satisfying driving requirements.

For example, the steps that "in the dual heating mode, at least one of a battery temperature, a heating outlet temperature, and a passenger compartment temperature of the hybrid electric vehicle is acquired; and one of the heat pump heating mode and the battery heat pump heating mode is set as a first priority adjustment object according to a range where the acquired temperature falls" may specifically include: acquiring the heating outlet temperature and the passenger compartment temperature; and setting the battery heat pump heating mode as the first priority adjustment object when the heating outlet temperature is greater than the target outlet temperature and the passenger compartment temperature is greater than the target in-vehicle temperature. In other words, when both the passenger compartment temperature and the heating outlet temperature are sufficient, the battery heating effect may be used as the primary adjustment goal, thereby better satisfying the battery heating requirements, ensuring effective operation of the battery, and satisfying driving requirements.

For example, the steps that "in the dual heating mode, at least one of a battery temperature, a heating outlet temperature, and a passenger compartment temperature of the hybrid electric vehicle is acquired; and one of the heat pump heating mode and the battery heat pump heating mode is set as a first priority adjustment object according to a range where the acquired temperature falls" may specifically include: acquiring the heating outlet temperature, and setting the heat pump heating mode as the first priority adjustment object when the heating outlet temperature is less than the target outlet temperature; or, acquiring the passenger compartment temperature, and setting the heat pump heating mode as the first priority adjustment object when the passenger compartment temperature is less than the target in-vehicle temperature. In other words, when the passenger compartment temperature or the heating outlet temperature is insufficient, the passenger compartment heating effect may be used as the primary adjustment goal, thereby better satisfying the passenger compartment heating requirements.

In some embodiments, an adjustment rule of the first priority adjustment object being the heat pump heating mode may include: adjusting the rotational speed of the compressor 1 according to the heating outlet temperature. Therefore, it may be ensured that the heating outlet temperature satisfies the heating requirements.

For example, a current heating outlet temperature (e.g., a footwell vent temperature) is detected and compared with the target outlet temperature. The rotational speed of the compressor 1 is reduced if the current heating outlet temperature is greater than the target outlet temperature. The rotational speed of the compressor 1 is increased if the current heating outlet temperature is less than the target outlet temperature. The current rotational speed of the compressor 1 is maintained if the current heating outlet temperature is equal to the target outlet temperature. The target outlet temperature may be determined according to a user set temperature, an in-vehicle temperature, an outside temperature, and a sunlight radiation corrected value, thereby ensuring the heating effect.

In some embodiments, an adjustment rule of the first priority adjustment object being the heat pump heating mode may include: adjusting, according to a suction inlet superheat of the compressor, an opening degree of the throttling device (e.g., the second electronic expansion valve 16 or the third electronic expansion valve 17 shown in FIG. 2) in the heat pump circuit used in the heat pump heating mode. Therefore, it may be ensured that a refrigerant sucked into the compressor 1 is in a superheated gaseous state, thereby ensuring safety of the compressor 1.

For example, a current suction inlet superheat (or an outlet superheat of the liquid circuit heat exchanger 30) of the compressor 1 is calculated and compared with a target superheat. The opening degree of the third electronic expansion valve 17 is increased (i.e., adjusting a valve direction for valve opening) if the current suction inlet superheat of the compressor 1 is greater than the target superheat. The opening degree of the third electronic expansion valve 17 is reduced (i.e., adjusting the valve direction for valve closing) if the current suction inlet superheat of the compressor 1 is less than the target superheat. The current opening degree of the third electronic expansion valve 17 is maintained (i.e., no valve adjustment is needed) if the current suction inlet superheat of the compressor 1 is equal to the target superheat. The target superheat may be a preset calibrated value that does not change under any conditions, thereby ensuring that a refrigerant sucked into the compressor 1 is in the superheated gaseous state, and ensuring the safety of the compressor 1.

Additionally, in the above embodiment, the suction inlet superheat of the compressor 1 is almost equal to an outlet superheat of the liquid circuit heat exchanger 30. The reason for calculating the current suction inlet superheat of the compressor 1 instead of the outlet superheat of the liquid circuit heat exchanger 30 in the present disclosure is that it is difficult to install a sensor at an outlet of the liquid circuit heat exchanger 30 in some systems. Certainly, if it is convenient to install a sensor, the current outlet superheat of the liquid circuit heat exchanger 30 may also be calculated instead of the current suction inlet superheat of the compressor 1, which is not limited here.

In some embodiments, an adjustment rule of the first priority adjustment object being the heat pump heating mode may include: adjusting, according to the heating outlet temperature, an opening degree of the throttling device (e.g., the fourth electronic expansion valve 35 shown in FIG. 2) in the heat pump circuit used in the battery heat pump heating mode. Therefore, flow allocation can be ensured, thereby satisfying the passenger compartment heating requirements.

In some embodiments, the adjusting, according to the heating outlet temperature, an opening degree of the throttling device in the heat pump circuit used in the battery heat pump heating mode includes: increasing the opening degree of the throttling device in the heat pump circuit used in the battery heat pump heating mode if T5>T4+K5; maintaining the opening degree of the throttling device in the heat pump circuit used in the battery heat pump heating mode if T4-K4≤T5≤T4+K5; reducing the opening degree of the throttling device in the refrigeration circuit used in the battery cooling mode if T4-K5≤T5<T4-K4; and closing the throttling device in the heat pump circuit used in the battery heat pump heating mode if T5<T4-K5, where T5 denotes the heating outlet temperature in °C. T4 denotes the target outlet temperature in °C; and K4 and K5 denote temperature compensation coefficients in °C, and K4 < K5. Therefore, precise flow allocation can be ensured, thereby prioritizing the passenger compartment heating requirements while achieving optimal heat allocation for battery heating.

For example, a specific method for "adjusting, according to the heating outlet temperature, the throttling device in the heat pump circuit used in the battery heat pump heating mode" may be as follows: assuming K4 = 2°C, K5 = 5°C, if the current heating outlet temperature T5 is 56°C and the target outlet temperature T4 is 50°C, with T5 > T4 + 5 (55°C), the opening degree of the fourth electronic expansion valve 35 is increased, which indicates that the current heating outlet temperature satisfies passenger compartment heating, allowing for a slight increase in heat allocation for a battery side; if the current heating outlet temperature T5 is 46°C and the target outlet temperature T4 is 50°C, with T4-K5 (45°C)≤T5<T4-K4 (48°C), the opening degree of the fourth electronic expansion valve 35 is decreased, and in this case, the current heating does not satisfy the passenger compartment heating requirements, requiring a decrease in battery heat allocation; if the current heating outlet temperature T5 is 52°C and the target outlet temperature T4 is 50°C, with T4-K4 (48°C)≤T5≤T4+K5 (55°C), the current opening degree of the fourth electronic expansion valve 35 is maintained, which indicates that the current heat allocation is appropriate, requiring maintaining the opening degree of the valve; and if the current heating outlet temperature T5 is 40°C and the target outlet temperature T4 is 50°C, with 40<T4-K5 (45°C), the fourth electronic expansion valve 35 is closed, to fully ensure the passenger compartment heating requirements.

In some embodiments, an adjustment rule of the first priority adjustment object being the battery heat pump heating mode includes: adjusting the rotational speed of the compressor 1 according to an inlet temperature of the battery heat exchanger 37 in the heat pump circuit used in the battery heat pump heating mode. Therefore, the battery heating requirements can be well ensured, and the problem of an excessively high battery temperature caused by an excessively high temperature of the battery heat exchanger 37 can be solved, thereby improving operation reliability and safety of the battery.

For example, a current inlet temperature of the battery heat exchanger 37 is detected, and compared with a target heating temperature. The rotational speed of the compressor 1 is reduced if the current inlet temperature of the battery heat exchanger 37 is greater than the target heating temperature. The rotational speed of the compressor 1 is increased if the current inlet temperature of the battery heat exchanger 37 is less than the target heating temperature. The current rotational speed of the compressor 1 is maintained if the current inlet temperature of the battery heat exchanger 37 is equal to the target heating temperature.

It should be noted that, in the battery heat pump heating mode, the refrigerant discharged from the compressor 1 is in a superheated state, a pressure and a temperature do not correspond to each other (in the superheated state, the temperature rises while the pressure remains constant). Therefore, instead of detecting an inlet pressure of the battery heat exchanger 37, the inlet temperature of the battery heat exchanger 37 is detected.

In some embodiments, an adjustment rule of the first priority adjustment object being the battery heat pump heating mode includes: adjusting, according to a suction inlet superheat of the compressor, an opening degree of the throttling device (e.g., the fourth electronic expansion valve 35 shown in FIG. 2) in the heat pump circuit used in the battery heat pump heating mode. Therefore, it may be ensured that the refrigerant sucked into the compressor 1 is in the superheated gaseous state, thereby ensuring the safety of the compressor 1.

For example, the current suction inlet superheat of the compressor 1 is calculated and compared with a target superheat. The opening degree of the fourth electronic expansion valve 35 is increased (i.e., adjusting the valve direction for valve opening) if the current suction inlet superheat of the compressor 1 is greater than the target superheat. The opening degree of the fourth electronic expansion valve 35 is reduced (i.e., adjusting the valve direction for valve closing) if the current suction inlet superheat of the compressor 1 is less than the target superheat. The current opening degree of the fourth electronic expansion valve 35 is maintained (i.e., no valve adjustment is needed) if the current suction inlet superheat of the compressor 1 is equal to the target superheat. The target superheat may be a preset calibrated value that does not change under any conditions, thereby ensuring that a refrigerant sucked into the compressor 1 is in the superheated gaseous state, and ensuring the safety of the compressor 1.

Additionally, in the above embodiment, the suction inlet superheat of the compressor 1 is almost equal to the outlet superheat of the liquid circuit heat exchanger 30. The reason for calculating the current suction inlet superheat of the compressor 1 instead of the outlet superheat of the liquid circuit heat exchanger 30 in the present disclosure is that it is difficult to install a sensor at the outlet of the liquid circuit heat exchanger 30 in some systems. But, if it is convenient to install a sensor, certainly, the current outlet superheat of the liquid circuit heat exchanger 30 may also be calculated instead of the current suction inlet superheat of the compressor 1, which is not limited here.

In some embodiments, an adjustment rule of the first priority adjustment object being the battery heat pump heating mode includes: maintaining a constant opening degree of the throttling device (e.g., the second electronic expansion valve 16 or the third electronic expansion valve 17 shown in FIG. 2) in the heat pump circuit used in the heat pump heating mode. Therefore, control may be simplified.

In some embodiments, the hybrid electric vehicle also includes a passenger compartment refrigeration mode and a battery cooling mode.

For example, with reference to FIG. 2, in the passenger compartment refrigeration mode, the refrigeration circuit including the compressor 1 is operated. The refrigeration circuit may include the compressor 1, the condenser (e.g., the outside heat exchanger 11 shown in FIG. 2), the throttling device (e.g., a first electronic expansion valve 13 shown in FIG. 2), and the evaporator (e.g., an in-vehicle evaporator 14 shown in FIG. 2). The evaporator (e.g., the in-vehicle evaporator 14 shown in FIG. 2) is configured for passenger compartment refrigeration.

For example, with reference to FIG. 2, in the battery cooling mode, the refrigeration circuit including the compressor 1 is operated. The refrigeration circuit may include the compressor 1, the condenser (e.g., the outside heat exchanger 11 shown in FIG. 2), the throttling device (e.g., the fourth electronic expansion valve 35 shown in FIG. 2), and the evaporator (e.g., the battery heat exchanger 37 shown in FIG. 2). The evaporator (e.g., the battery heat exchanger 37 shown in FIG. 2) is configured for battery cooling.

In some embodiments, the hybrid electric vehicle includes a dual refrigeration mode. In the dual refrigeration mode, both the passenger compartment refrigeration mode and the battery cooling mode are controlled to operate simultaneously, and the refrigeration circuits respectively used by both share the same compressor 1. Therefore, passenger compartment refrigeration and battery cooling may be achieved simultaneously, and by using the same compressor 1, the thermal management system can be simplified, and costs are reduced.

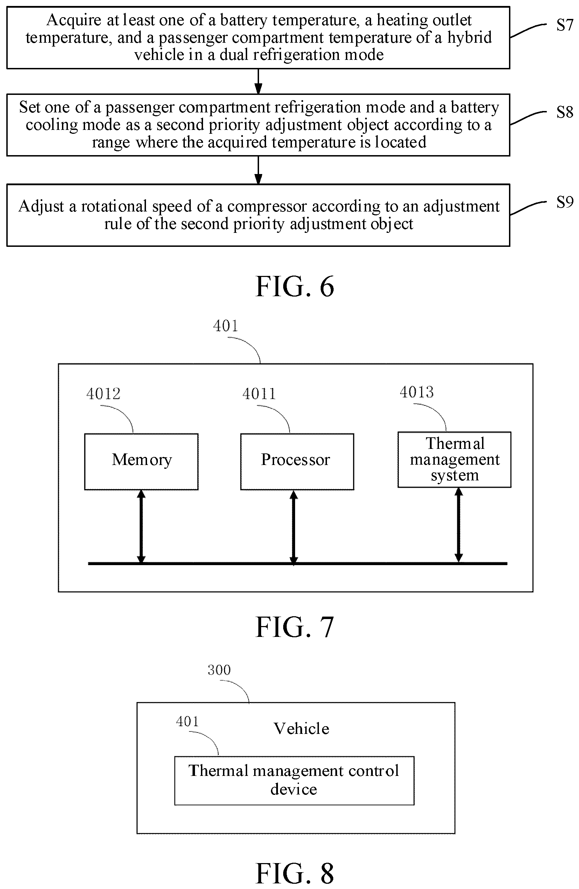

In some embodiments, with reference to FIG. 6, the thermal management control method includes the following steps: S7: In the dual refrigeration mode, at least one of a battery temperature, a heating outlet temperature, and a passenger compartment temperature of the hybrid electric vehicle is acquired. S8: One of the passenger compartment refrigeration mode and the battery cooling mode is set as a second priority adjustment object according to a range where the acquired temperature falls. S9: A rotational speed of the compressor is adjusted according to an adjustment rule of the second priority adjustment object.

Since in the dual refrigeration mode, both the passenger compartment refrigeration mode and the battery cooling mode operate simultaneously, and the refrigeration circuits respectively used by both share the same compressor 1, based on the control method in the present disclosure, the rotational speed of the compressor 1 may be adjusted according to priority levels of the passenger compartment refrigeration mode and the battery cooling mode, thereby allowing the rotational speed of the compressor 1 to better coordinate passenger compartment refrigeration and battery cooling requirements.

For example, when the passenger compartment refrigeration mode is set as the second priority adjustment object, the rotational speed of the compressor 1 is adjusted according to an adjustment rule of the passenger compartment refrigeration mode, thereby making a passenger compartment refrigeration effect as a primary adjustment goal and better satisfying passenger compartment refrigeration requirements. For example, when the battery cooling mode is set as the second priority adjustment object, the rotational speed of the compressor 1 is adjusted according to an adjustment rule of the battery cooling mode, thereby making a battery cooling effect as a primary adjustment goal and better satisfying battery cooling requirements.

For example, the steps that "in the dual refrigeration mode, at least one of a battery temperature, a heating outlet temperature, and a passenger compartment temperature of the hybrid electric vehicle is acquired; and one of the passenger compartment refrigeration mode and the battery cooling mode is set as a second priority adjustment object according to a range where the acquired temperature falls" may specifically include: acquiring a battery temperature; and setting the battery cooling mode as the second priority adjustment object when the battery temperature is greater than a sixth set temperature (e.g., the sixth set temperature may be 45°C). In other words, when the battery temperature is high, the battery cooling effect may be used as the primary adjustment goal, thereby better satisfying the battery cooling requirements.

For example, the steps that "in the dual refrigeration mode, at least one of a battery temperature, a heating outlet temperature, and a passenger compartment temperature of the hybrid electric vehicle is acquired; and one of the passenger compartment refrigeration mode and the battery cooling mode is set as a second priority adjustment object according to a range where the acquired temperature falls" may further include: acquiring a passenger compartment temperature, and setting the battery cooling mode as the second priority adjustment object when the battery temperature is less than the sixth set temperature and the passenger compartment temperature is less than the target in-vehicle temperature; or, acquiring a refrigeration outlet temperature, and setting the battery cooling mode as the second priority adjustment object when the battery temperature is less than the sixth set temperature, and the refrigeration outlet temperature is less than the target outlet temperature. In other words, when the battery temperature is low and the passenger compartment temperature (or the refrigeration outlet temperature) is low, the battery cooling effect may be used as the primary adjustment goal, thereby better satisfying the battery cooling requirements, ensuring effective operation of the battery, and satisfying driving requirements.

For example, the steps that "in the dual refrigeration mode, at least one of a battery temperature, a heating outlet temperature, and a passenger compartment temperature of the hybrid electric vehicle is acquired; and one of the passenger compartment refrigeration mode and the battery cooling mode is set as a second priority adjustment object according to a range where the acquired temperature falls" may specifically include: setting the passenger compartment refrigeration mode as the second priority adjustment object when the battery temperature is less than the sixth set temperature; or, acquiring the passenger compartment temperature, and setting the passenger compartment refrigeration mode as the second priority adjustment object when the battery temperature is less than the sixth set temperature and the passenger compartment temperature is greater than the target in-vehicle temperature; or, acquiring the refrigeration outlet temperature, and setting the passenger compartment refrigeration mode as the second priority adjustment object when the battery temperature is less than the sixth set temperature, and the refrigeration outlet temperature is greater than the target outlet temperature. In other words, when the battery temperature is low, or when the battery temperature is low and the refrigeration outlet temperature (or the passenger compartment temperature) is high, the passenger compartment refrigeration effect may be used as the primary adjustment goal, thereby better satisfying the passenger compartment refrigeration requirements.

In some embodiments, an adjustment rule of the second priority adjustment object being the passenger compartment refrigeration mode includes: adjusting the rotational speed of the compressor 1 according to the refrigeration outlet temperature. Therefore, the passenger compartment refrigeration requirements can be better satisfied.

For example, a current refrigeration outlet temperature (e.g., a face vent temperature) is detected and compared with a target outlet temperature. The rotational speed of the compressor 1 is reduced if the current refrigeration outlet temperature is less than the target outlet temperature. The rotational speed of the compressor 1 is increased if the current refrigeration outlet temperature is greater than the target outlet temperature. The current rotational speed of the compressor 1 is maintained if the current refrigeration outlet temperature is equal to the first target outlet temperature. The target outlet temperature may be determined according to a user set temperature, an in-vehicle temperature, an outside temperature, and a sunlight radiation corrected value, thereby ensuring the refrigeration effect.

In some embodiments, an adjustment rule of the second priority adjustment object being the passenger compartment refrigeration mode includes: adjusting, according to a suction inlet superheat of the compressor, an opening degree of the throttling device (e.g., the first electronic expansion valve 13 shown in FIG. 2) in the refrigeration circuit used in the passenger compartment refrigeration mode. Therefore, it may be ensured that the refrigerant sucked into the compressor 1 is in the superheated gaseous state, thereby ensuring the safety of the compressor 1.

For example, a current outlet superheat (which is almost equal to the suction inlet superheat of the compressor 1) of the in-vehicle evaporator 14 is calculated and compared with a target superheat. The opening degree of the first electronic expansion valve 13 is increased (i.e., adjusting the valve direction for valve opening) if the current outlet superheat of the in-vehicle evaporator 14 is greater than the target superheat. The opening degree of the first electronic expansion valve 13 is reduced (i.e., adjusting the valve direction for valve closing) if the current outlet superheat of the in-vehicle evaporator 14 is less than the target superheat. The current opening degree of the first electronic expansion valve 13 is maintained (i.e., no valve adjustment is needed) if the current outlet superheat of the in-vehicle evaporator 14 is equal to the target superheat. The target superheat may be a preset calibrated value that does not change under any conditions, thereby ensuring that a refrigerant sucked into the compressor 1 is in the superheated gaseous state, and ensuring the safety of the compressor 1.

In some embodiments, the opening degree of the throttling device in the refrigeration circuit used in the battery cooling mode is adjusted according to the refrigeration outlet temperature. Therefore, flow allocation can be ensured, thereby satisfying the passenger compartment refrigeration requirements.

Specifically: the step that the opening degree of the throttling device in the refrigeration circuit used in the battery cooling mode is adjusted according to the refrigeration outlet temperature includes: increasing the opening degree of the throttling device in the refrigeration circuit used in the battery cooling mode if T2<T1+K1; maintaining the opening degree of the throttling device in the refrigeration circuit used in the battery cooling mode if T1+ K1≤T2≤T1+K2; reducing the opening degree of the throttling device in the refrigeration circuit used in the battery cooling mode if T1+ K2<T2≤T1+ K3; and closing the throttling device in the refrigeration circuit used in the battery cooling mode if T2> T1+ K3, where T2 denotes the refrigeration outlet temperature in °C; T1 denotes the target refrigeration temperature in °C; and K1, K2, and K3 denote temperature compensation coefficients in °C, where K1<K2<K3.

For example, a specific method for "adjusting the opening degree of the throttling device in the refrigeration circuit used in the battery cooling mode according to the refrigeration outlet temperature" may be as follows: assuming K1= 2°C, K2= 3°C, K3 =7°C, if the current refrigeration outlet temperature T2 is 5°C, the target refrigeration temperature T1 is 4°C, and T2 < T1 + K1, the opening degree of the fourth electronic expansion valve 35 is increased, which indicates that the current refrigeration outlet temperature satisfies passenger compartment refrigeration, and refrigeration allocation on the battery side may be properly increased; if the current refrigeration outlet temperature T2 is 8°C, the target refrigeration temperature T1 is 4°C, and T2≤T1+7, the opening degree of the fourth electronic expansion valve 35 is reduced, which indicates that current passenger compartment refrigeration is insufficient, and battery refrigeration allocation is reduced; if the current refrigeration outlet temperature T2 is 6°C, the target refrigeration temperature T1 is 4°C, and T1+2≤T2≤T1+3, the current opening degree of the fourth electronic expansion valve 35 is maintained, which indicates that current refrigeration allocation is appropriate, and the opening degree of the valve is maintained; and if the current refrigeration outlet temperature T2 is 15°C, the target refrigeration temperature T1 is 4°C, and T2>T1+7, the fourth electronic expansion valve 35 is closed to fully ensure the passenger compartment refrigeration requirements. In some embodiments, an adjustment rule of the second priority adjustment object being the battery cooling mode includes: adjusting the rotational speed of the compressor according to an outlet pressure of the battery heat exchanger 37 in the refrigeration circuit used in the battery cooling mode. Therefore, the battery cooling requirements can be satisfied.

For example, the current outlet pressure of the battery heat exchanger 37 is detected and compared with a target pressure value. The rotational speed of the compressor 1 is reduced if the current outlet pressure of the battery heat exchanger 37 is greater than the target pressure value. The rotational speed of the compressor 1 is increased if the current outlet pressure of the battery heat exchanger 37 is less than the target pressure value. The current rotational speed of the compressor 1 is maintained if the current outlet pressure of the battery heat exchanger 37 is equal to the target pressure value.

To ensure the battery cooling effect, the present disclosure uses a saturation state and superheat of an outlet refrigerant of the battery heat exchanger 37 as metrics. The saturation state corresponds to a saturation temperature, and meanwhile the saturation temperature has a corresponding pressure (the pressure of the refrigerant remains basically unchanged in the superheated state above the saturation temperature). Therefore, the outlet pressure of the battery heat exchanger 37 is used here as a target to adjust the rotational speed of the compressor 1, thereby ensuring that the refrigerant reaches saturation at a preset temperature. Then, by adjusting the opening degree of the fourth electronic expansion valve 35, the superheat of the refrigerant is adjusted to achieve the battery cooling effect. The reasons for not directly detecting the temperature of the battery itself are as follows: firstly, there is a delay in battery temperature changes; and secondly, the battery itself has a certain volume, but only one or more positions are detected, which cannot accurately reflect the battery temperature.

In some embodiments, an adjustment rule of the second priority adjustment object being the battery cooling mode includes: adjusting, according to a suction inlet superheat of the compressor, the opening degree of the throttling device (e.g., the fourth electronic expansion valve 35 shown in FIG. 2) in the refrigeration circuit used in the battery cooling mode. Therefore, it may be ensured that the refrigerant sucked into the compressor 1 is in the superheated gaseous state, thereby ensuring the safety of the compressor 1.

For example, a current outlet superheat (which is almost equal to the suction inlet superheat of the compressor 1) of the battery heat exchanger 37 is calculated and compared with a target superheat. The opening degree of the fourth electronic expansion valve 35 is increased (i.e., adjusting the valve direction for valve opening) if the current outlet superheat of the battery heat exchanger 37 is greater than the target superheat. The opening degree of the fourth electronic expansion valve 35 is reduced (i.e., adjusting the valve direction for valve closing) if the current outlet superheat of the battery heat exchanger 37 is less than the target superheat. The current opening degree of the fourth electronic expansion valve 35 is maintained (i.e., no valve adjustment is needed) if the current outlet superheat of the battery heat exchanger 37 is equal to the target superheat. The target superheat may be a preset calibrated value that does not change under any conditions, thereby ensuring that a refrigerant sucked into the compressor 1 is in the superheated gaseous state, and ensuring the safety of the compressor 1.

In some embodiments, an adjustment rule of the second priority adjustment object being the battery cooling mode includes: maintaining a constant opening degree of the throttling device (e.g., the first electronic expansion valve 13 shown in FIG. 2) in the refrigeration circuit used in the passenger compartment refrigeration mode. Therefore, control may be simplified.

A thermal management control method for a hybrid electric vehicle according to a specific embodiment of the present disclosure is described below.

The hybrid electric vehicle includes a motor and an engine. The hybrid electric vehicle has at least two driving modes, which are respectively a pure electric mode (an EV mode for short, EV is an abbreviation of an electric vehicle) and a hybrid mode (an HEV mode for short, HEV is an abbreviation of a hybrid electric vehicle). In the pure electric mode, the vehicle is driven to run by the motor. In the hybrid mode, the vehicle is driven to run by a combination of the motor and the engine.

As shown in FIG. 2, the hybrid electric vehicle has a thermal management system. The thermal management system may include: a compressor 1, a first pressure and temperature sensor 2, an in-vehicle condenser 3, a second pressure and temperature sensor 4, a first solenoid valve 5, a second solenoid valve 6, a third pressure and temperature sensor 7, a fourth solenoid valve 8, a third solenoid valve 9, a fourth pressure and temperature sensor 10, an outside heat exchanger 11, a blower 12, a first electronic expansion valve 13, an in-vehicle evaporator 14, a fifth pressure and temperature sensor 15, a second electronic expansion valve 16, a third electronic expansion valve 17, a high-temperature radiator 18, a five-way valve 19, a heating circulation liquid pump 20, an electric heater 21 (e.g., a PTC, an abbreviation for a positive temperature coefficient, a thermistor), a warm air core 22, a high-temperature radiator fan 23, a high-temperature circuit three-way valve 24, a fifth solenoid valve 25, an engine 26, an engine circulation liquid pump 27, a sixth solenoid valve 28, a motor and electric control system 29, a liquid circuit heat exchanger 30, a low-temperature circuit coolant pump 31, a water intercooler 32, a low-temperature circuit three-way valve 33, a low-temperature radiator 34, a fourth electronic expansion valve 35, a sixth pressure and temperature sensor 36, a battery heat exchanger 37, a seventh pressure and temperature sensor 38, a seventh solenoid valve 39, a low-temperature radiator fan 40, a check valve 41, etc.

Therefore, the thermal management system may include a motor side liquid circuit system, an engine side liquid circuit system, a passenger compartment thermal management system, and a power battery thermal management system. The motor side liquid circuit system includes: the low-temperature radiator fan 40, the motor and electric control system 29, a low-temperature liquid circuit of the liquid circuit heat exchanger 30, the low-temperature circuit coolant pump 31, the water intercooler 32, the low-temperature circuit three-way valve 33, and the low-temperature radiator 34. The engine side liquid circuit system includes: the high-temperature radiator 18, the five-way valve 19, the heating circulation liquid pump 20, the electric heater 21, the warm air core 22, the high-temperature radiator fan 23, the high-temperature circuit three-way valve 24, the engine 26, the engine circulation liquid pump 27, and a high-temperature liquid circuit of the liquid circuit heat exchanger 30. For a connection relationship of components in each system, reference may be made to FIG. 2, which will not be elaborated here.

The thermal management system according to this embodiment has at least eight working modes, which are respectively described below.

### Mode 1: Passenger compartment refrigeration mode

In the passenger compartment refrigeration mode, after being discharged from the compressor 1, a refrigerant sequentially flows through: the first pressure and temperature sensor 2, the in-vehicle condenser 3, the second pressure and temperature sensor 4, the second solenoid valve 6, the third pressure and temperature sensor 7, the outside heat exchanger 11, the first electronic expansion valve 13, the in-vehicle evaporator 14, the fifth pressure and temperature sensor 15, and the fourth pressure and temperature sensor 10, and then returns to the compressor 1. The refrigerant dissipates heat outside the vehicle when flowing through the outside heat exchanger 11, is throttled when flowing through the first electronic expansion valve 13, and absorbs heat when flowing through the in-vehicle evaporator 14, thereby refrigerating a passenger compartment.

In the passenger compartment refrigeration mode, an adjustment rule for the first electronic expansion valve 13 is as follows. A current outlet superheat (or a suction inlet superheat of the compressor 1) of the in-vehicle evaporator 14 is calculated and compared with a target superheat (e.g., a first target superheat). An opening degree of the first electronic expansion valve 13 is increased (i.e., adjusting a valve direction for valve opening) if the current outlet superheat of the in-vehicle evaporator 14 is greater than the first target superheat; the opening degree of the first electronic expansion valve 13 is reduced (i.e., adjusting the valve direction for valve closing) if the current outlet superheat of the in-vehicle evaporator 14 is less than the first target superheat; and the current opening degree of the first electronic expansion valve 13 is maintained (i.e., no valve adjustment is needed) if the current outlet superheat of the in-vehicle evaporator 14 is equal to the first target superheat.

The first target superheat may be a preset calibrated value that does not change under any conditions, thereby ensuring that a refrigerant sucked into the compressor 1 is in a superheated gaseous state, and ensuring the safety of the compressor 1.

In the passenger compartment refrigeration mode, an adjustment rule for a rotational speed of the compressor 1 is as follows. A current refrigeration outlet temperature, such as a face vent temperature is detected and compared with a target outlet temperature (e.g., a first target outlet temperature). The rotational speed of the compressor 1 is reduced if the current refrigeration outlet temperature is less than the first target outlet temperature. The rotational speed of the compressor 1 is increased if the current refrigeration outlet temperature is greater than the first target outlet temperature. The current rotational speed of the compressor 1 is maintained if the current refrigeration outlet temperature is equal to the first target outlet temperature.

The first target outlet temperature may be determined according to a user set temperature, an in-vehicle temperature, an outside temperature, and a sunlight radiation corrected value, thereby ensuring a refrigeration effect.

### Mode 2: Battery cooling mode

In the battery cooling mode, after being discharged from the compressor 1, the refrigerant sequentially flows through: the first pressure and temperature sensor 2, the in-vehicle condenser 3, the second pressure and temperature sensor 4, the second solenoid valve 6, the third pressure and temperature sensor 7, the outside heat exchanger 11, the check valve 41, the fifth solenoid valve 25, the fourth electronic expansion valve 35, the sixth pressure and temperature sensor 36, the battery heat exchanger 37, the seventh pressure and temperature sensor 38, the seventh solenoid valve 39, and the fourth pressure and temperature sensor 10, and then returns to the compressor 1. The refrigerant dissipates heat outside the vehicle when flowing through the outside heat exchanger 11, is throttled when flowing through the fourth electronic expansion valve 35, and absorbs heat when flowing through the battery heat exchanger 37, thereby cooling a battery.

In the battery cooling mode, an adjustment rule for the fourth electronic expansion valve 35 is as follows. A current outlet superheat (or a suction inlet superheat of the compressor 1) of the battery heat exchanger 37 is calculated and compared with a target superheat (e.g., a second target superheat). An opening degree of the fourth electronic expansion valve 35 is increased (i.e., adjusting the valve direction for valve opening) if the current outlet superheat of the battery heat exchanger 37 is greater than the second target superheat; the opening degree of the fourth electronic expansion valve 35 is reduced (i.e., adjusting the valve direction for valve closing) if the current outlet superheat of the battery heat exchanger 37 is less than the second target superheat; and the current opening degree of the fourth electronic expansion valve 35 is maintained (i.e., no valve adjustment is needed) if the current outlet superheat of the battery heat exchanger 37 is equal to the second target superheat.

The second target superheat may be a preset calibrated value that does not change under any conditions, thereby ensuring that the refrigerant sucked into the compressor 1 is in the superheated gaseous state, and ensuring the safety of the compressor 1.

In the battery cooling mode, an adjustment rule for the rotational speed of the compressor 1 is as follows. A current outlet pressure of the battery heat exchanger 37 is detected and compared with a target pressure value. The rotational speed of the compressor 1 is reduced if the current outlet pressure of the battery heat exchanger 37 is greater than the target pressure value. The rotational speed of the compressor 1 is increased if the current outlet pressure of the battery heat exchanger 37 is less than the target pressure value. The current rotational speed of the compressor 1 is maintained if the current outlet pressure of the battery heat exchanger 37 is equal to the target pressure value.

To ensure the battery cooling effect, the present disclosure uses a saturation state and superheat of an outlet refrigerant of the battery heat exchanger 37 as metrics. The saturation state corresponds to a saturation temperature, and meanwhile the saturation temperature has a corresponding pressure (the pressure of the refrigerant remains basically unchanged in the superheated state above the saturation temperature). Therefore, the outlet pressure of the battery heat exchanger 37 is used here as a target to adjust the rotational speed of the compressor 1, thereby ensuring that the refrigerant reaches saturation at a preset temperature. Then, by adjusting the opening degree of the fourth electronic expansion valve 35, the superheat of the refrigerant is adjusted to achieve the battery cooling effect. The reasons for not directly detecting the temperature of the battery itself are as follows: firstly, there is a delay in battery temperature changes; and secondly, the battery itself has a certain volume, but only one or more positions are detected, which cannot accurately reflect the battery temperature.

### Mode 3: Dual refrigeration mode

The dual refrigeration mode refers to the simultaneous operation of the passenger compartment refrigeration mode and the battery cooling mode, and refrigeration circuits respectively used in the passenger compartment refrigeration mode and the battery cooling mode share the same compressor. Therefore, in the dual refrigeration mode, after being discharged from the compressor 1, the refrigerant sequentially flows through: the first pressure and temperature sensor 2, the in-vehicle condenser 3, the second pressure and temperature sensor 4, the second solenoid valve 6, the third pressure and temperature sensor 7, the outside heat exchanger 11, the check valve 41, and then is split into following two paths.

In one path, the refrigerant sequentially flows through the first electronic expansion valve 13, the in-vehicle evaporator 14, the fifth pressure and temperature sensor 15, and the fourth pressure and temperature sensor 10, and then returns to the compressor 1. The refrigerant is throttled when flowing through the first electronic expansion valve 13, and releases cold when flowing through the in-vehicle evaporator 14, thereby refrigerating the passenger compartment.

In the other path, the refrigerant sequentially flows through the fifth solenoid valve 25, the fourth electronic expansion valve 35, the sixth pressure and temperature sensor 36, the battery heat exchanger 37, the seventh pressure and temperature sensor 38, the seventh solenoid valve 39, and the fourth pressure and temperature sensor 10, and then returns to the compressor 1. The refrigerant is throttled when flowing through the fourth electronic expansion valve 35, and releases cold when flowing through the battery heat exchanger 37, thereby cooling the battery.

In the dual refrigeration mode, priority adjustment levels are set for the passenger compartment refrigeration mode and the battery cooling mode.

Firstly, the battery temperature (i.e., a battery core temperature) is compared with a first target battery core temperature (e.g., 45°C). The battery cooling mode is prioritized for adjustment if the current battery core temperature is greater than or equal to the first target battery core temperature. The refrigeration outlet temperature is compared with the target outlet temperature if the current battery core temperature is less than the first target battery core temperature. The passenger compartment refrigeration mode is prioritized for adjustment if the current refrigeration outlet temperature is greater than or equal to the target outlet temperature and the current battery core temperature is less than the first target battery core temperature. The battery cooling mode is prioritized for adjustment if the current refrigeration outlet temperature is less than the target outlet temperature and the current battery core temperature is less than the first target battery core temperature.

If the passenger compartment refrigeration mode is prioritized for adjustment, the opening degree of the first electronic expansion valve 13 is adjusted according to the outlet superheat of the in-vehicle evaporator 14, the rotational speed of the compressor 1 is adjusted according to the refrigeration outlet temperature, and allocated flow of the fourth electronic expansion valve 35 is adjusted according to the refrigeration outlet temperature, thereby ensuring that passenger compartment refrigeration satisfies requirements.

The step that the opening degree of the throttling device in the refrigeration circuit used in the battery cooling mode is adjusted according to the refrigeration outlet temperature includes: increasing the opening degree of the throttling device in the refrigeration circuit used in the battery cooling mode if T2<T1+K1; maintaining the opening degree of the throttling device in the refrigeration circuit used in the battery cooling mode if T1+ K1≤T2≤T1+K2; reducing the opening degree of the throttling device in the refrigeration circuit used in the battery cooling mode if T1+ K2<T2≤T1+ K3; and closing the throttling device in the refrigeration circuit used in the battery cooling mode if T2> T1+ K3, where T2 denotes the refrigeration outlet temperature in °C; T1 denotes the target refrigeration temperature in °C; and K1, K2, and K3 denote temperature compensation coefficients in °C, where K1<K2<K3.

For example, a specific method for "adjusting the opening degree of the throttling device in the refrigeration circuit used in the battery cooling mode according to the refrigeration outlet temperature" may be as follows: assuming K1= 2°C, K2= 3°C, K3 =7°C, if the current refrigeration outlet temperature T2 is 5°C, the target refrigeration temperature T1 is 4°C, and T2 < T1 + K1, the opening degree of the fourth electronic expansion valve 35 is increased, which indicates that the current refrigeration outlet temperature satisfies passenger compartment refrigeration, and refrigeration allocation on the battery side may be properly increased; if the current refrigeration outlet temperature T2 is 8°C, the target refrigeration temperature T1 is 4°C, and T2≤T1+7, the opening degree of the fourth electronic expansion valve 35 is reduced, which indicates that current passenger compartment refrigeration is insufficient, and battery refrigeration allocation is reduced; if the current refrigeration outlet temperature T2 is 6°C, the target refrigeration temperature T1 is 4°C, and T1+2≤T2≤T1+3, the current opening degree of the fourth electronic expansion valve 35 is maintained, which indicates that current refrigeration allocation is appropriate, and the opening degree of the valve is maintained; and if the current refrigeration outlet temperature T2 is 15°C, the target refrigeration temperature T1 is 4°C, and T2>T1+7, the fourth electronic expansion valve 35 is closed to fully ensure the passenger compartment refrigeration requirements.

If the battery cooling mode is prioritized for adjustment, the fourth electronic expansion valve 35 is adjusted according to the outlet superheat of the battery heat exchanger 37, the rotational speed of the compressor 1 is adjusted according to the outlet pressure value of the battery heat exchanger 37, and meanwhile the opening degree of the first electronic expansion valve 13 corresponding to the in-vehicle evaporator 14 is maintained unchanged.

### Mode 4: Heat pump heating mode in passenger compartment heating mode

The heat pump heating mode includes: heat pump air source heating and heat pump liquid source heating, where the heat pump liquid source heating includes large-scale heat pump liquid source heating and a small-scale heat pump liquid source heating, which are introduced respectively below.

In the heat pump air source heating mode, a heat pump circuit absorbs heat from an air source. Specifically, the heat pump circuit may be as follows: after being discharged from the compressor 1, the refrigerant sequentially flows through: the first pressure and temperature sensor 2, the in-vehicle condenser 3, the second pressure and temperature sensor 4, the fourth solenoid valve 8, the second electronic expansion valve 16, the outside heat exchanger 11, the third solenoid valve 9, and the fourth pressure and temperature sensor 10, and then returns to the compressor 1. The refrigerant condenses and releases heat when flowing through the in-vehicle condenser 3 to heat the passenger compartment, is throttled when flowing through the second electronic expansion valve 16, and absorbs heat from an ambient air source when flowing through the outside heat exchanger 11.

In the heat pump air source heating mode, an adjustment rule for the second electronic expansion valve 16 is as follows. A current outlet superheat (or a suction inlet superheat of the compressor 1) of the outside heat exchanger 11 is calculated and compared with a target superheat (e.g., a third target superheat). The opening degree of the second electronic expansion valve 16 is increased (i.e., adjusting the valve direction for valve opening) if the current outlet superheat of the outside heat exchanger 11 is greater than the third target superheat; the opening degree of the second electronic expansion valve 16 is reduced (i.e., adjusting the valve direction for valve closing) if the current outlet superheat of the outside heat exchanger 11 is less than the third target superheat; and the current opening degree of the second electronic expansion valve 16 is maintained (i.e., no valve adjustment is needed) if the current outlet superheat of the outside heat exchanger 11 is equal to the third target superheat.

The third target superheat may be a preset calibrated value that does not change under any conditions, thereby ensuring that the refrigerant sucked into the compressor 1 is in the superheated gaseous state, and ensuring the safety of the compressor 1.

In the heat pump air source heating mode, an adjustment rule for the rotational speed of the compressor 1 is as follows. A current heating outlet temperature (e.g., a footwell vent temperature) is detected and compared with a target outlet temperature (e.g., a second target outlet temperature). The rotational speed of the compressor 1 is reduced if the current heating outlet temperature is greater than the second target outlet temperature; the rotational speed of the compressor 1 is increased if the current heating outlet temperature is less than the second target outlet temperature; and the current rotational speed of the compressor 1 is maintained if the current heating outlet temperature is equal to the second target outlet temperature.

The second target outlet temperature may be determined according to a user set temperature, an in-vehicle temperature, an outside temperature, and a sunlight radiation corrected value, thereby ensuring a heating effect.

In the heat pump liquid source heating mode, after being discharged from the compressor 1, the refrigerant sequentially flows through: the first pressure and temperature sensor 2, the in-vehicle condenser 3, the second pressure and temperature sensor 4, the fourth solenoid valve 8, the third electronic expansion valve 17, the sixth solenoid valve 28, a refrigerant circuit of the liquid circuit heat exchanger 30, and the fourth pressure and temperature sensor 10, and then returns to the compressor 1. The refrigerant releases heat when flowing through the in-vehicle condenser 3 to heat the passenger compartment, is throttled when flowing through the third electronic expansion valve 17, and absorbs liquid source heat from a liquid circuit of the liquid circuit heat exchanger 30 when flowing through the liquid circuit heat exchanger 30.

It should be noted that the liquid circuit heat exchanger 30 contains the refrigerant circuit and the liquid circuit, and cooling liquid and other coolants may flow through the liquid circuit. The liquid circuit heat exchanger 30 may have two liquid circuits or one liquid circuit. When two liquid circuits are included (as shown in FIG. 2), the two liquid circuits are a high-temperature liquid circuit (communicating with the engine side liquid circuit system) and a low-temperature liquid circuit (communicating with the motor side liquid circuit system) respectively. When one liquid circuit is included (the example is not shown in the figure), the liquid circuit may serve as a high-temperature liquid circuit or a low-temperature liquid circuit (in this case, the engine side liquid circuit system and the motor side liquid circuit system may be modified to a series connection relationship).

In the small-scale heat pump liquid source heating mode, heat of a liquid source flowing through the liquid circuit heat exchanger 30 comes from the low-temperature liquid circuit. The low-temperature circuit coolant pump 31 operates to enable the liquid circuit heat exchanger 30 to absorb waste heat from a motor side through the low-temperature liquid circuit.

In the small-scale heat pump liquid source heating mode, the rotational speed of the low-temperature circuit coolant pump 31 may be maintained at a maximum rotational speed or a rated rotational speed, thereby ensuring heat absorption requirements of the heat pump circuit from the liquid circuit heat exchanger 30.

In the large-scale heat pump liquid source heating mode, the heat of the liquid source flowing through the liquid circuit heat exchanger 30 comes from the high-temperature liquid circuit. The engine 26 works, and the engine circulation liquid pump 27 operates, thereby allowing the liquid circuit heat exchanger 30 to absorb the heat from the engine 26 through the high-temperature liquid circuit.

In the large-scale heat pump liquid source heating mode, the rotational speed of the engine circulation liquid pump 27 is maintained at a maximum rotational speed or a rated rotational speed, thereby ensuring heat absorption requirements of the heat pump circuit from the liquid circuit heat exchanger 30.

In the large-scale heat pump liquid source heating mode, if the motor also operates and needs cooling, the low-temperature circuit coolant pump 31 may also be turned on, thereby allowing the heat of the liquid source of the liquid circuit heat exchanger 30 to come from both the high-temperature liquid circuit and the low-temperature liquid circuit.

Under heat pump liquid source heating (including large-scale heat pump liquid source heating and small-scale heat pump liquid source heating), an adjustment rule for the opening degree of the third electronic expansion valve 17 is as follows. A current suction inlet superheat (or an outlet superheat of the liquid circuit heat exchanger 30) of the compressor 1 is calculated and compared with a target superheat (e.g., a fourth target superheat). The opening degree of the third electronic expansion valve 17 is increased (i.e., adjusting the valve direction for valve opening) if the current suction inlet superheat of the compressor 1 is greater than the fourth target superheat; the opening degree of the third electronic expansion valve 17 is reduced (i.e., adjusting the valve direction for valve closing) if the current suction inlet superheat of the compressor 1 is less than the fourth target superheat; and the current opening degree of the third electronic expansion valve 17 is maintained (i.e., no valve adjustment is needed) if the current suction inlet superheat of the compressor 1 is equal to the fourth target superheat.

The fourth target superheat may be a preset calibrated value that does not change under any conditions, thereby ensuring that the refrigerant sucked into the compressor 1 is in the superheated gaseous state, and ensuring the safety of the compressor 1. Additionally, in the above embodiment, the suction inlet superheat of the compressor 1 is almost equal to an outlet superheat of the liquid circuit heat exchanger 30. The reason for calculating the current suction inlet superheat of the compressor 1 instead of the outlet superheat of the liquid circuit heat exchanger 30 in the present disclosure is that it is difficult to install a sensor at an outlet of the liquid circuit heat exchanger 30 in some systems. Certainly, if it is convenient to install a sensor, the current outlet superheat of the liquid circuit heat exchanger 30 may also be calculated instead of the current suction inlet superheat of the compressor 1, which is not limited here.

Under heat pump liquid source heating (including large-scale heat pump liquid source heating and small-scale heat pump liquid source heating), an adjustment rule for the rotational speed of the compressor 1 is as follows. A current heating outlet temperature (e.g., a footwell vent temperature) is detected and compared with a target outlet temperature (e.g., a third target outlet temperature). The rotational speed of the compressor 1 is reduced if the current heating outlet temperature is greater than the third target outlet temperature; the rotational speed of the compressor 1 is increased if the current heating outlet temperature is less than the third target outlet temperature; and the current rotational speed of the compressor 1 is maintained if the current heating outlet temperature is equal to the third target outlet temperature.

The third target outlet temperature may be determined according to a user set temperature, an in-vehicle temperature, an outside temperature, and a sunlight radiation corrected value, thereby ensuring the heating effect.

### Mode 5: Warm air heating mode in passenger compartment heating mode

The warm air heating mode may include an engine warm air mode and an electric heating warm air mode, which are introduced respectively below.

In the engine warm air mode, the heat pump circuit including the compressor 1 does not operate, the engine side liquid circuit system circulates, a coolant flows out of the engine circulation liquid pump 27 and sequentially flows through the engine 26, the high-temperature circuit three-way valve 24, the five-way valve 19, the electric heater 21, the warm air core 22, and the five-way valve 19, and then returns to the engine circulation liquid pump 27, the engine 26 operates and heats the coolant, the coolant absorbs high-temperature heat from the engine, and hot air is blown to the passenger compartment through the warm air core 22 for heating.

In the engine warm air mode, the rotational speed of the engine circulation liquid pump 27 may be adjusted according to the heating outlet temperature, thereby satisfying heating requirements.

In the electric heating warm air mode, the heat pump circuit including the compressor 1 does not operate, the engine side liquid circuit system circulates, the coolant flows out of the heating circulation liquid pump 20 and sequentially flows through the electric heater 21, the warm air core 22, the five-way valve 19, the engine circulation liquid pump 27, the engine 26, the high-temperature circuit three-way valve 24, and the five-way valve 19, and then returns to the heating circulation liquid pump 20, the engine 26 does not operate, and the electric heater 21 operates to heat the coolant, which blows hot air to the passenger compartment through the warm air core 22 for heating.

In the electric heating warm air mode, the heating circulation liquid pump 20 may be maintained at a maximum rotational speed or a rated rotational speed. Meanwhile, heating power of the electric heater 21 may be adjusted according to an outlet temperature of the passenger compartment, thereby satisfying the heating requirements and reducing energy consumption.

As mentioned above, when the passenger compartment needs to be heated, the following five heating modes may be selected: the heat pump air source heating mode (i.e., opening and throttling the second electronic expansion valve 16 corresponding to the outside heat exchanger 11 to absorb the heat from the air source), the small-scale heat pump liquid source heating mode (opening and throttling the third electronic expansion valve 17 corresponding to the liquid circuit heat exchanger 30, and the liquid circuit heat exchanger 30 absorbing the heat from the low-temperature liquid circuit), the large-scale heat pump liquid source heating mode (opening and throttling the third electronic expansion valve 17 corresponding to the liquid circuit heat exchanger 30, starting the engine 26, and the liquid circuit heat exchanger 30 absorbing the heat of the engine 26 from the high-temperature liquid circuit), the engine warm air mode (the compressor 1 being not operational, the liquid circuit absorbing the high-temperature heat from the engine 26, and directly blowing hot air through the warm air core 22), and the electric heating warm air mode (the compressor 1 being not operational, the electric heater 21 heating the liquid circuit, and directly blowing hot air through the warm air core 22). The following introduces how to select the above five heating modes according to the situation

In the EV mode, the engine 26 is not started, priority is given to determining a temperature of the low-temperature liquid circuit flowing through the liquid circuit heat exchanger 30. If the temperature of the low-temperature liquid circuit is within a first liquid temperature range (e.g., greater than -10°C), the small-scale heat pump liquid source heating mode is entered.

In the EV mode, the engine 26 is not started, if the temperature of the low-temperature liquid circuit flowing through the liquid circuit heat exchanger 30 exceeds the first liquid temperature range (e.g., less than -10°C), an ambient temperature is further determined, and if the ambient temperature is within a first air temperature range (e.g., -25°C to -10°C), the electric heating warm air mode is entered; and if the ambient temperature is within a second air temperature range (e.g., greater than -10°C), the heat pump air source heating mode is entered.

It should be noted that in the small-scale heat pump liquid source heating mode, if the vehicle stops and the liquid circuit heat exchanger 30 is not replenished, even if the ambient temperature is -10°C or above, continuous operation in the small-scale heat pump liquid source heating mode may cause the temperature of the low-temperature liquid circuit to drop to -10°C or below, and in this case, the heat pump air source heating mode is entered.

In the HEV mode, the engine 26 starts, a temperature of the high-temperature liquid circuit flowing through the liquid circuit heat exchanger 30 is determined, and if the temperature of the high-temperature liquid circuit is within a second liquid temperature range (e.g., 40°C to 60°C), the large-scale heat pump liquid source heating mode is entered. If the temperature of the high-temperature liquid circuit is within a third liquid temperature range (e.g., greater than 60°C), the engine warm air mode is entered. If the temperature of the high-temperature liquid circuit is below the second liquid temperature range (e.g., less than 40°C), heating is not activated to avoid affecting the warm-up of the engine 26. Moreover, after the engine 26 starts, the period during which the temperature of the high-temperature liquid circuit is less than 40°C is short, and does not affect subsequent heating.

### Mode 6: Battery heat pump heating mode

In the battery heat pump heating mode, after being discharged from the compressor 1, the refrigerant sequentially flows through: the first pressure and temperature sensor 2, the first solenoid valve 5, the seventh pressure and temperature sensor 38, the battery heat exchanger 37, the sixth pressure and temperature sensor 36, the fourth electronic expansion valve 35, the sixth solenoid valve 28, the liquid circuit heat exchanger 30, and the fourth pressure and temperature sensor 10, and then returns to the compressor 1. The refrigerant heats the battery when flowing through the battery heat exchanger 37, is throttled when flowing through the fourth electronic expansion valve 35 (a bidirectional electronic expansion valve), and absorbs the heat from the liquid source when flowing through the liquid circuit heat exchanger 30.

For example, the heating circulation liquid pump 20 and the electric heater 21 may be turned on to provide heat to the liquid source flowing through the liquid circuit heat exchanger 30, thereby solving the problems about the low ambient temperature and insufficient heat from the air source.

In the battery heat pump heating mode, an adjustment rule for the fourth electronic expansion valve 35 is as follows. A current suction inlet superheat of the compressor 1 is calculated and compared with a target superheat (e.g., a fifth target superheat). The opening degree of the fourth electronic expansion valve 35 is increased (i.e., adjusting the valve direction for valve opening) if the current suction inlet superheat of the compressor 1 is greater than the fifth target superheat; the opening degree of the fourth electronic expansion valve 35 is reduced (i.e., adjusting the valve direction for valve closing) if the current suction inlet superheat of the compressor 1 is less than the fifth target superheat; and the current opening degree of the fourth electronic expansion valve 35 is maintained (i.e., no valve adjustment is needed) if the current suction inlet superheat of the compressor 1 is equal to the fifth target superheat.

The fifth target superheat may be a preset calibrated value that does not change under any conditions, thereby ensuring that the refrigerant sucked into the compressor 1 is in the superheated gaseous state, and ensuring the safety of the compressor 1. Additionally, in the mode, the current suction inlet superheat of the compressor 1 is almost equal to the outlet superheat of the liquid circuit heat exchanger 30. In the above embodiment, the reason for calculating the current suction inlet superheat of the compressor 1 instead of the outlet superheat of the liquid circuit heat exchanger 30 is that it is difficult to install a sensor at the outlet of the liquid circuit heat exchanger 30 in some systems. However, if it is convenient to install a sensor, certainly, the current outlet superheat of the liquid circuit heat exchanger 30 may also be calculated instead of the current suction inlet superheat of the compressor 1, which is not limited herein.

In the battery heat pump heating mode, an adjustment rule for the rotational speed of the compressor 1 is as follows. A current inlet temperature of the battery heat exchanger 37 is detected, and compared with a target heating temperature. The rotational speed of the compressor 1 is reduced if the current inlet temperature of the battery heat exchanger 37 is greater than the target heating temperature. The rotational speed of the compressor 1 is increased if the current inlet temperature of the battery heat exchanger 37 is less than the target heating temperature. The current rotational speed of the compressor 1 is maintained if the current inlet temperature of the battery heat exchanger 37 is equal to the target heating temperature.

It should be noted that, in the battery heat pump heating mode, the refrigerant discharged from the compressor 1 is in a superheated state, a pressure and a temperature do not correspond to each other (in the superheated state, the temperature rises while the pressure remains constant). Therefore, instead of detecting an inlet pressure of the battery heat exchanger 37, the inlet temperature of the battery heat exchanger 37 is detected.

Additionally, as mentioned above, in the battery cooling mode, the rotational speed of the compressor 1 is controlled according to the outlet pressure of the battery heat exchanger 37 while the rotational speed of the compressor 1 in the battery heat pump heating mode is controlled according to the inlet temperature of the battery heat exchanger 37, and following several reasons exist. 1: In the battery heat pump heating mode, the temperature of the refrigerant discharged out of the compressor 1 is high, it is necessary to avoid battery damage by the high-temperature refrigerant, and therefore the inlet temperature of the battery heat exchanger 37 needs to be detected rather than the outlet temperature of the battery heat exchanger 37. 2: In the battery heat pump heating mode, the refrigerant discharged out of the battery heat exchanger 37 is in a liquid state, and therefore the outlet pressure of the battery heat exchanger 37 is not detected.

### Mode 7: Dual heating mode

The dual heating mode refers to the simultaneous operation of both the heat pump heating mode and the battery heat pump heating mode, and the heat pump circuits respectively used in the heat pump heating mode and the battery heat pump heating mode share the same compressor.

Additionally, when the warm air heating mode and the battery heat pump heating mode are combined, since the common compressor 1 is not involved, the warm air heating mode and the battery heat pump heating mode are separately adjusted without affecting each other.

However, the dual heating mode refers to the combination of the heat pump heating mode and the battery heat pump heating mode, and therefore in the dual heating mode, it is necessary to set priority adjustment levels for the heat pump heating mode and the battery heat pump heating mode.

In a first aspect, the current heating outlet temperature may be detected and compared with the target outlet temperature. If the current heating outlet temperature is greater than or equal to the target outlet temperature and a current in-vehicle temperature is greater than an in-vehicle set temperature, the battery heat pump heating mode is prioritized for adjustment. If the current heating outlet temperature is less than the target outlet temperature or the current invehicle temperature is less than the in-vehicle set temperature, the heat pump heating mode is prioritized for adjustment.

In a second aspect, the battery temperature (e.g., the battery core temperature) may be detected and compared with a second target battery core temperature (e.g., 10°C). If the current battery core temperature is greater than or equal to the second target battery core temperature, the heat pump heating mode is prioritized for adjustment. If the current battery core temperature is less than the second target battery core temperature and the current in-vehicle temperature is greater than the in-vehicle set temperature, the battery heat pump heating mode is prioritized for adjustment.

In some examples, if it is determined that both the above two aspects are present, the second aspect may be prioritized for determination.

If the heat pump heating mode is prioritized for adjustment, the opening degree of the electronic expansion valve (e.g., the second electronic expansion valve 16 or the third electronic expansion valve 17) corresponding to the current heat pump heating mode is adjusted, the rotational speed of the compressor 1 is adjusted according to the heating outlet temperature of the compressor 1, and allocated flow of the fourth electronic expansion valve 35 is adjusted according to the heating outlet temperature, thereby ensuring that passenger compartment heating satisfies requirements.

The adjusting, according to the heating outlet temperature, an opening degree of the throttling device in the heat pump circuit used in the battery heat pump heating mode includes: increasing an opening degree of a throttling device in the heat pump circuit used in the battery heat pump heating mode if T5>T4+K5; maintaining the opening degree of the throttling device in the heat pump circuit used in the battery heat pump heating mode if T4-K4≤T5≤T4+K5; reducing the opening degree of the throttling device in the refrigeration circuit used in the battery cooling mode if T4-K5≤T5<T4-K4; and closing the throttling device in the heat pump circuit used in the battery heat pump heating mode if T5<T4-K5, where T5 denotes the heating outlet temperature in °C. T4 denotes the target outlet temperature in °C; and K4 and K5 denote temperature compensation coefficients in °C, and K4 < K5. Therefore, precise flow allocation can be ensured, thereby prioritizing the passenger compartment heating requirements while achieving optimal heat allocation for battery heating.

For example, a specific method for "adjusting, according to the heating outlet temperature, the throttling device in the heat pump circuit used in the battery heat pump heating mode" may be as follows: assuming: K4 = 2°C, K5 = 5°C, if the current heating outlet temperature T5 is 56°C and the target outlet temperature T4 is 50°C, with T5 > T4 + 5 (55°C), the opening degree of the fourth electronic expansion valve 35 is increased, which indicates that the current heating outlet temperature satisfies passenger compartment heating, allowing for a slight increase in heat allocation for a battery side; if the current heating outlet temperature T5 is 46°C and the target outlet temperature T4 is 50°C, with T4-K5 (45°C)≤T5<T4-K4 (48°C), the opening degree of the fourth electronic expansion valve 35 is decreased, and in this case, the current heating does not satisfy the passenger compartment heating requirements, requiring a decrease in battery heat allocation; if the current heating outlet temperature T5 is 52°C and the target outlet temperature T4 is 50°C, with T4-K4 (48°C)≤T5≤T4+K5 (55°C), the current opening degree of the fourth electronic expansion valve 35 is maintained, which indicates that the current heat allocation is appropriate, requiring maintaining the opening degree of the valve; and if the current heating outlet temperature T5 is 40°C and the target outlet temperature T4 is 50°C, with 40<T4-K5 (45°C), the fourth electronic expansion valve 35 is closed, to fully ensure the passenger compartment heating requirements. If the battery heat pump heating mode is prioritized for adjustment, the fourth electronic expansion valve 35 is adjusted according to the suction inlet superheat of the compressor 1, the rotational speed of the compressor 1 is adjusted according to the inlet temperature of the battery heat exchanger 37, and meanwhile the opening degree of the electronic expansion valve (e.g., the second electronic expansion valve 16 or the third electronic expansion valve 17) corresponding to the current heat pump heating mode is maintained unchanged.

### Mode 8: Heat pump dehumidification mode

The heat pump dehumidification mode may include a first dehumidification mode and a second dehumidification mode.

In the first dehumidification mode, after being discharged from the compressor 1, the refrigerant sequentially flows through: the first pressure and temperature sensor 2, the in-vehicle condenser 3, the second pressure and temperature sensor 4, the fourth solenoid valve 8, the first electronic expansion valve 13, the in-vehicle evaporator 14, the fifth pressure and temperature sensor 15, and the fourth pressure and temperature sensor 10, and then returns to the compressor 1. Air circulating within the vehicle is heated when flowing through the in-vehicle condenser 3, and then, is cooled when flowing through the in-vehicle evaporator 14, thereby achieving an effect of dehumidifying water in the air. For example, the first dehumidification mode may be activated when the ambient temperature is greater than a dehumidification threshold (e.g., -5°C).

In the second dehumidification mode, after being discharged from the compressor 1, the refrigerant sequentially flows through: the first pressure and temperature sensor 2, the in-vehicle condenser 3, the second pressure and temperature sensor 4, and the fourth solenoid valve 8, and then is split into two paths. In one path, the refrigerant flows through the first electronic expansion valve 13, the in-vehicle evaporator 14, the fifth pressure and temperature sensor 15, and the fourth pressure and temperature sensor 10, and then returns to the compressor 1; and in the other path, the refrigerant flows through the second electronic expansion valve 16, the outside heat exchanger 11, the third pressure and temperature sensor 7, the third solenoid valve 9, and the fourth pressure and temperature sensor 10, and then returns to the compressor 1. The air circulating within the vehicle is heated when flowing through the in-vehicle condenser 3, and then, is cooled when flowing through the in-vehicle evaporator 14, thereby achieving the effect of dehumidifying the water in the air. For example, the second dehumidification mode may be activated when the ambient temperature is less than or equal to the dehumidification threshold (e.g., -5°C).

In the dehumidification mode, for the adjustment of the opening degree of the electronic expansion valve, reference may be made to the control of the opening degree of the electronic expansion valve in other modes mentioned above, and for the adjustment of the rotational speed of the compressor 1, reference may be made to the adjustment of the rotational speed of the compressor 1 in other modes mentioned above, which will not be elaborated herein.

In the related art, compared with the thermal management system for the hybrid electric vehicle in the present disclosure, some thermal management systems for hybrid electric vehicles have the following disadvantages.

Firstly, some thermal management systems for the hybrid electric vehicles in the related art lack a discharge pressure and temperature sensor. When a compressor discharge pressure and temperature are greater than a normal operating range, a control system cannot control a compressor workload through pressure and temperature feedback signals, causing a compressor to operate under overload conditions and be susceptible to damage. Moreover, an efficient and energy-saving operation by outputting a corresponding duty cycle according to a system highpressure change cannot be achieved.

Secondly, some thermal management systems for the hybrid electric vehicles in the related art lack a suction pressure and temperature sensor. When a compressor suction pressure and temperature fall below a normal operating range, a control system cannot control a compression ratio of a compressor during normal operation through suction pressure and temperature feedback signals, leading the compressor to operate under no-load conditions, which can easily cause wear and damage to dynamic and static scroll disks.

Thirdly, some thermal management systems for the hybrid electric vehicles in the related art lack an outlet pressure and temperature sensor of the in-vehicle evaporator, and in a refrigeration mode, a flow rate of an electronic expansion valve cannot be controlled through feedback signals from the sensor, resulting in a poor whole-vehicle refrigeration effect.

In the description of the present disclosure, it should be understood that orientation or position relationships indicated are based on orientation or position relationships shown in the accompanying drawings, and are used only for facilitating the description of the present disclosure and simplifying the description, rather than indicating or implying that a device or element referred needs to have a particular orientation or needs to be constructed and operated in a particular orientation. Therefore, it should not be construed as a limitation on the present disclosure.

Additionally, the present disclosure further provides a computer-readable storage medium, having a computer program stored therein. The computer program is suitable for being executed by a processor to implement the thermal management control method according to this embodiment of the present disclosure. The technical effects are consistent with those of the thermal management control method according to this embodiment of the present disclosure, which will not be elaborated herein.

As shown in FIG. 7, additionally, the present disclosure further provides a thermal management control device 401, including a processor 4011 and a memory 4012. The thermal management control device 401 may further include a thermal management system 4013.

The processor 4011 is configured to control an overall operation of the thermal management control device 401 to complete all or some of the steps in the thermal management control method provided in the above method embodiments. The memory 4012 is configured to store various types of data to support the operation of the thermal management control device 401. These data may include, for example, instructions for any application or method operating on the thermal management control device 401. The memory 4012 may be implemented by any type of volatile or non-volatile storage device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic storage, a flash memory, a magnetic disk, or an optical disk. The thermal management system 4013 may include the thermal management control system shown in FIG. 1.

In an exemplary embodiment, the thermal management control device 401 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the thermal management control method provided in the above method embodiments.

Additionally, as shown in FIG. 8, the present disclosure further provides a vehicle 300, including the thermal management control device 401 according to this embodiment of the present disclosure. The technical effects are consistent with those of the thermal management control method according to this embodiment of the present disclosure, which will not be elaborated herein.

Additionally, terms "first" and "second" are used merely for the purpose of description, and shall not be construed as indicating or implying relative importance or implying a quantity of indicated technical features. Therefore, a feature limited by "first" or "second" may explicitly or implicitly include one or more of the features. In the descriptions of the present disclosure, unless otherwise explicitly limited, "plurality" means two or more than two.

In the present disclosure, unless otherwise explicitly specified and limited, the terms "mount", "connect", "connection", and "fix" should be understood in a broad sense. For example, a connection may be a fixed connection, a detachable connection, or an integral connection; or the connection may be a direct connection, an indirect connection through an intermediate medium, internal communication between two components, or an interaction relationship between two components. Those of ordinary skill in the art may understand the specific meanings of the foregoing terms in the present disclosure according to specific situations.

In the description of this specification, the description of the reference terms "an embodiment", "some embodiments", "an example", "a specific example", "some examples", or the like means that specific features, structures, materials, or characteristics described in combination with the embodiment(s) or example(s) are included in at least one embodiment or example of the present disclosure. In this specification, schematic descriptions of the foregoing terms are not necessarily directed at the same embodiment or example. Besides, the specific features, the structures, the materials, or the characteristics that are described may be combined in proper manners in any one or more embodiments or examples. Additionally, those skilled in the art may integrate and combine different embodiments or examples described in the specification and features of the different embodiments or examples as long as they are not contradictory to each other.

Although the embodiments of the present disclosure have been shown and described, those of ordinary skill in the art should understand that various changes, modifications, substitutions, and variations may be made to the embodiments without departing from the principles and spirit of the present disclosure, and the scope of the present disclosure is as defined by the claims and their equivalents.

## Claims

1. A thermal management control method for a vehicle, wherein the vehicle comprises a plurality of driving modes and a plurality of passenger compartment heating modes, the driving modes respectively correspond to corresponding determination rules, the determination rules are configured to select the corresponding passenger compartment heating modes, the thermal management control method comprising:
acquiring a current driving mode;
entering a corresponding determination rule based on the acquired driving mode; and
entering a corresponding passenger compartment heating mode according to a determination result of the determination rule.

2. The thermal management control method according to claim 1, wherein the plurality of driving modes comprise an HEV mode, the plurality of passenger compartment heating modes comprise: a first heat pump heating mode and a first warm air mode, a heat pump circuit used in the first heat pump heating mode exchanges heat with a first liquid circuit that absorbs heat from an engine, a warm air circuit used in the first warm air mode absorbs the heat from the engine, and the thermal management control method comprises:
acquiring a temperature of the first liquid circuit in the HEV mode;
selecting to enter the first heat pump heating mode or the first warm air mode according to a range where the temperature of the first liquid circuit falls;
entering the first heat pump heating mode when the temperature of the first liquid circuit is less than a first set temperature; and
entering the first warm air mode when the temperature of the first liquid circuit is greater than the first set temperature.

3. The thermal management control method according to claim 2, wherein the thermal management control method comprises:
not entering the first heat pump heating mode or the first warm air mode when the temperature of the first liquid circuit is less than a second set temperature, wherein the second set temperature is less than the first set temperature.

4. The thermal management control method according to any one of claims 1 to 3, wherein the plurality of driving modes comprise an EV mode, the plurality of passenger compartment heating modes comprise: a second heat pump heating mode, a third heat pump heating mode, and a second warm air mode, a heat pump circuit used in the second heat pump heating mode exchanges heat with a second liquid circuit that absorbs heat from a motor, a heat pump circuit used in the third heat pump heating mode exchanges heat with an air heat source, a warm air circuit used in the second warm air mode absorbs heat from an electric heater, and the thermal management control method comprises:
acquiring a temperature of the second liquid circuit and an ambient temperature outside the vehicle in the EV mode;
selecting to enter one of the second heat pump heating mode, the third heat pump heating mode, and the second warm air mode according to a range where the temperature of the second liquid circuit falls and a range where the ambient temperature outside the vehicle falls;
entering the second heat pump heating mode when the temperature of the second liquid circuit is greater than a third set temperature; and
selecting to enter the third heat pump heating mode or the second warm air mode when the temperature of the second liquid circuit is less than the third set temperature.

5. The thermal management control method according to claim 4, wherein the thermal management control method comprises:
entering the third heat pump heating mode when the ambient temperature outside the vehicle is greater than a fourth set temperature; and
entering the second warm air mode when the ambient temperature outside the vehicle is less than the fourth set temperature.

6. The thermal management control method according to any one of claims 1 to 5, wherein the plurality of passenger compartment heating modes comprise at least one heat pump heating mode, the vehicle further comprises a battery heat pump heating mode, the vehicle comprises a dual heating mode, in the dual heating mode, the heat pump heating mode and the battery heat pump heating mode are controlled to operate simultaneously, and heat pump circuits respectively used by both share a same compressor.

7. The thermal management control method according to claim 6, wherein the thermal management control method comprises:
acquiring at least one of a battery temperature, a heating outlet temperature, and a passenger compartment temperature of the vehicle in the dual heating mode;
setting one of the heat pump heating mode and the battery heat pump heating mode as a first priority adjustment object according to a range where the acquired temperature falls; and
adjusting a rotational speed of the compressor according to an adjustment rule of the first priority adjustment object.

8. The thermal management control method according to claim 7, wherein the thermal management control method comprises:
acquiring the battery temperature; and
setting the heat pump heating mode as the first priority adjustment object when the battery temperature is greater than a fifth set temperature; and
the thermal management control method further comprising:
setting the battery heat pump heating mode as the first priority adjustment object when the battery temperature is less than the fifth set temperature;
or, acquiring the passenger compartment temperature, and setting the battery heat pump heating mode as the first priority adjustment object when the battery temperature is less than the fifth set temperature and the passenger compartment temperature is greater than a target in-vehicle temperature;
or, acquiring the heating outlet temperature, and setting the battery heat pump heating mode as the first priority adjustment object when the battery temperature is less than the fifth set temperature and the heating outlet temperature is greater than a target outlet temperature.

9. The thermal management control method according to claim 7, wherein thermal management control method comprises:
acquiring the heating outlet temperature and the passenger compartment temperature;
setting the battery heat pump heating mode as the first priority adjustment object when the heating outlet temperature is greater than a target outlet temperature and the passenger compartment temperature is greater than a target in-vehicle temperature;
or, acquiring the heating outlet temperature, and setting the heat pump heating mode as the first priority adjustment object when the heating outlet temperature is less than a target outlet temperature;
or, acquiring the passenger compartment temperature, and setting the heat pump heating mode as the first priority adjustment object when the passenger compartment temperature is less than a target in-vehicle temperature.

10. The thermal management control method according to claim 9, wherein an adjustment rule of the first priority adjustment object being the heat pump heating mode comprises:
adjusting a rotational speed of the compressor according to the heating outlet temperature; and/or
adjusting, according to a suction inlet superheat of the compressor, an opening degree of a throttling device in a heat pump circuit used in the heat pump heating mode; and/or
adjusting, according to the heating outlet temperature, an opening degree of a throttling device in a heat pump circuit used in the battery heat pump heating mode.

11. The thermal management control method according to claim 9, wherein an adjustment rule of the first priority adjustment object being the battery heat pump heating mode comprises:
adjusting a rotational speed of the compressor according to an inlet temperature of a battery heat exchanger in a heat pump circuit used in the battery heat pump heating mode; and/or
adjusting, according to a suction inlet superheat of the compressor, an opening degree of a throttling device in a heat pump circuit used in the battery heat pump heating mode; and/or
maintaining a constant opening degree of a throttling device in a heat pump circuit used in the heat pump heating mode.

12. The thermal management control method according to any one of claims 1 to 11, wherein the vehicle further comprises a passenger compartment refrigeration mode and a battery cooling mode, the vehicle comprises a dual refrigeration mode, and the thermal management control method comprises:
controlling both the passenger compartment refrigeration mode and the battery cooling mode to operate simultaneously in the dual refrigeration mode, and refrigeration circuits respectively used by both sharing the same compressor.

13. The thermal management control method according to claim 12, wherein the thermal management control method comprises:
acquiring at least one of a battery temperature, a heating outlet temperature, and a passenger compartment temperature of the vehicle in the dual refrigeration mode;
setting one of the passenger compartment refrigeration mode and the battery cooling mode as a second priority adjustment object according to a range where the acquired temperature falls; and
adjusting a rotational speed of the compressor according to an adjustment rule of the second priority adjustment object.

14. The thermal management control method according to claim 13, wherein the thermal management control method comprises:
acquiring the battery temperature; and
setting the battery cooling mode as the second priority adjustment object when the battery temperature is greater than a sixth set temperature.

15. The thermal management control method according to claim 14, wherein the thermal management control method comprises:
acquiring the passenger compartment temperature, and setting the battery cooling mode as the second priority adjustment object when the battery temperature is less than the sixth set temperature and the passenger compartment temperature is less than the target in-vehicle temperature;
or, acquiring the refrigeration outlet temperature, and setting the battery cooling mode as the second priority adjustment object when the battery temperature is less than the sixth set temperature, and the refrigeration outlet temperature is less than the target outlet temperature;
or, setting the passenger compartment refrigeration mode as the second priority adjustment object when the battery temperature is less than the sixth set temperature;
or, acquiring the passenger compartment temperature, and setting the passenger compartment refrigeration mode as the second priority adjustment object when the battery temperature is less than the sixth set temperature and the passenger compartment temperature is greater than the target in-vehicle temperature;
or, acquiring the refrigeration outlet temperature, and setting the passenger compartment refrigeration mode as the second priority adjustment object when the battery temperature is less than the sixth set temperature, and the refrigeration outlet temperature is greater than the target outlet temperature.

16. The thermal management control method according to claim 13, wherein an adjustment rule of the second priority adjustment object being the passenger compartment refrigeration mode comprises:
adjusting a rotational speed of the compressor according to a refrigeration outlet temperature; and/or
adjusting, according to a suction inlet superheat of the compressor, an opening degree of a throttling device in a refrigeration circuit used in the passenger compartment refrigeration mode; and/or
adjusting an opening degree of a throttling device in a refrigeration circuit used in the battery cooling mode according to the refrigeration outlet temperature.

17. The thermal management control method according to claim 13, an adjustment rule of the second priority adjustment object being the battery cooling mode comprising:
adjusting a rotational speed of the compressor according to an outlet pressure of a battery heat exchanger in a refrigeration circuit used in the battery cooling mode; and/or
adjusting, according to a suction inlet superheat of the compressor, an opening degree of a throttling device in a refrigeration circuit used in the battery cooling mode; and/or
maintaining a constant opening degree of a throttling device in a refrigeration circuit used in the passenger compartment refrigeration mode.

18. A computer-readable storage medium, having a computer program stored therein, and the computer program being suitable for being executed by a processor to implement the thermal management control method according to any one of claims 1 to 17.

19. A thermal management control device, comprising a processor and a memory, and the processor being connected with the memory; and the memory being configured to store a computer program, the computer program comprising a program instruction, and the processor being configured to invoke the program instruction to perform the thermal management control method according to any one of claims 1 to 17.

20. A vehicle, comprising the thermal management control device according to claim 19.
